# EUROPEAN PATENT APPLICATION

(11) **EP 3 122 113 A1**
(43) Date of publication of application: **25.01.2017**
(21) Application number: 15765617.4
(22) Date of filing: 19.03.2015
(51) Int. Cl.: H04W 28/08, H04W 76/04

(54) **COMMUNICATION DEVICE, COMMUNICATION METHOD, COMMUNICATION SYSTEM, AND PROGRAM**

(30) Priority: 20.03.2014 JP 2014058725
(71) Applicant: NEC Corporation, Tokyo 108-8001 (JP)
(72) Inventor: AKIYOSHI, Ippei, Tokyo 108-8001 (JP)
(74) Representative: Robson, Aidan John
(86) International application number: PCT/JP2015/001540
(87) International publication number: WO 2015/141227

(57) **Abstract**

Effects on communication services caused by re-establishment of a communication path are suppressed when resource control is performed in a communication system. A communication apparatus according to the present invention is a communication apparatus in a communication system providing communication services to a terminal through a communication path associated with the terminal, and includes: a first means capable of switching a first session set up between the communication apparatus and a network node to a second session; and a second means capable of sending a control signal including information related to the second session to the network node.

## Description

### [Technical Field]

The present invention is based upon and claims the benefit of priority from Japanese Patent Application No. 2014-058725, filed on March 20, 2014, the disclosure of which is incorporated herein in its entirety by reference.

The present invention relates to a communication apparatus, a communication method, a communication system, and a program that are used for communication.

### [Background Art]

In recent years, communication traffic is sharply increasing with the proliferation of smartphones and the like. Accordingly, to respond to the increasing traffic, the operators of communication systems are required to install resources in the communication systems.

On the other hand, since traffic volumes are varying from time to time, it is conceivable that installation of resources adapted to the peak of traffic may result in a waste of the resources.

Accordingly, there is an increasing demand for a technique that can flexibly control resources of a communication system.

For example, in LTE (Long Term Evolution), which has been developing in recent years, resources of a communication system include base stations (eNodeBs), MMEs (Mobility Management Entities), gateway apparatuses, and the like, as disclosed in NPL 1.

### [Citation List]

### [Non Patent Literature]

[NPL 1]
3GPP TS23.401 V12.3.0 (2013-12) 3rd Geenration Partnership Project; Technical Specification Group Services and System Aspects; General Packet Radio Service (GPRS) enhancements for Evolved Unicersal Terrestrial Radio Access Network (E-UTRAN) access (Release 12)

### [Summary]

### [Technical Problem]

A communication system sets up a communication path (bearer) passing through various resources and provides communication services to a terminal (UE: User Equipment) via such a communication path, as disclosed in subchapter 5.3.2 of NPL 1 above.

However, according to the technique of NPL 1 above, for example, when a resource (e.g., a gateway or the like) on a communication path is changed due to installation or the like, an Initial Attach procedure disclosed in subchapter 5.3.2.1 is re-performed to set up a communication path passing through the resources after the change.

It is conceivable that re-performance of an "Initial Attach" procedure may cause various effects on communication services, such as an interruption of the communication services.

An object of the present invention is to provide a technique that can flexibly control resources while suppressing effects on communication services.

### [Solution to Problem]

A communication apparatus of the present invention is a communication apparatus in a communication system that provides communication services to a terminal through a communication path associated with the terminal, and includes: a first means capable of switching a first session set up between the communication apparatus and a network node to a second session; and a second means capable of sending a control signal including information related to the second session to the network node.

A communication method of the present invention is a method for communication by a communication apparatus in a communication system that provides communication services to a terminal through a communication path associated with the terminal, and is characterized by: switching a first session set up between the communication apparatus and a network node to a second session; and sending a control signal including information related to the second session to the network node.

A communication system of the present invention is a communication system that provides communication services to a terminal through a communication path associated with the terminal, and includes: a communication apparatus; and a network node that configures a first session with the communication apparatus, wherein the communication apparatus includes: a first means capable of switching the first session to a second session; and a second means capable of sending a control signal including information related to the second session to the network node.

A program of the present invention causes a computer in a communication system that provides communication services to a terminal through a communication path associated with the terminal, to execute: processing for switching a first session set up between the communication apparatus and a network node to a second session; and processing for sending a control signal including information related to the second session to the network node.

### [Advantageous Effects of Invention]

According to the present invention, it is possible to provide a technique that can flexibly control resources while suppressing effects on communication services.

### [Brief Description of Drawings]

[Fig. 1] Fig. 1 is an architecture diagram showing an example of a communication system according to a first exemplary embodiment of the present invention.
[Fig. 2] Fig. 2 is a schematic diagram showing an example of a communication path in the communication system according to the first exemplary embodiment.
[Fig. 3] Fig. 3 is a block diagram showing an example of the configuration of a communication apparatus according to the first exemplary embodiment.
[Fig. 4] Fig. 4 is a schematic diagram showing an example of session switching between communication apparatuses according to the first exemplary embodiment.
[Fig. 5] Fig. 5 is a sequence chart showing an example of session switching operation in the first exemplary embodiment.
[Fig. 6] Fig. 6 is a block diagram showing an example of the configuration of a server according to Example 1 of a second exemplary embodiment of the present invention.
[Fig. 7] Fig. 7 is a block diagram showing an example of the functional configuration of a control section of the server according to Example 1 of the second exemplary embodiment.
[Fig. 8] Fig. 8 is a schematic architecture diagram showing an outline of session switching operation in Example 1 of the second exemplary embodiment.
[Fig. 9] Fig. 9 is a sequence chart showing a first example of the session switching operation in Example 1 of the second exemplary embodiment.
[Fig. 10] Fig. 10 is a sequence chart showing a second example of the session switching operation in Example 1 of the second exemplary embodiment.
[Fig. 11] Fig. 11 is a block diagram showing an example of the configuration of a server according to Example 2 of the second exemplary embodiment.
[Fig. 12] Fig. 12 is a schematic architecture diagram showing an outline of session switching operation in Example 2 of the second exemplary embodiment.
[Fig. 13] Fig. 13 is a sequence chart showing an example of the session switching operation in Example 2 of the second exemplary embodiment.
[Fig. 14] Fig. 14 is a block diagram showing an example of the configuration of a server according to Example 3 of the second exemplary embodiment.
[Fig. 15] Fig. 15 is a sequence chart showing a first example of session switching operation in Example 3 of the second exemplary embodiment.
[Fig. 16] Fig. 16 is a sequence chart showing a second example of the session switching operation in Example 3 of the second exemplary embodiment.
[Fig. 17] Fig. 17 is a block diagram showing an example of the configuration of a server according to Example 4 of the second exemplary embodiment.
[Fig. 18] Fig. 18 is a sequence chart showing an example of session switching operation in Example 4 of the second exemplary embodiment.
[Fig. 19] Fig. 19 is an architecture diagram showing an example of a communication system according to Example 5 of the second exemplary embodiment.
[Fig. 20] Fig. 20 is a sequence chart showing an example of operation in the communication system according to Example 5 of the second exemplary embodiment.
[Fig. 21] Fig. 21 is an architecture diagram showing an example of a communication system according to Example 6 of the second exemplary embodiment.
[Fig. 22] Fig. 22 is a sequence chart showing an example of operation in the communication system according to Example 6 of the second exemplary embodiment.
[Fig. 23] Fig. 23 is a block diagram showing an example of the configuration of a control apparatus in a communication system according to a third exemplary embodiment of the present invention.
[Fig. 24] Fig. 24 is a sequence chart showing a first example of operation in the communication system according to the third exemplary embodiment.
[Fig. 25] Fig. 25 is a sequence chart showing a second example of operation in the communication system according to the third exemplary embodiment.
[Fig. 26] Fig. 26 is a block diagram showing another example of the configuration of the control apparatus in the communication system according to the third exemplary embodiment.
[Fig. 27] Fig. 27 is a schematic diagram showing an example of the data structure of a management DB in the control apparatus shown in Fig. 26.
[Fig. 28] Fig. 28 is a schematic architecture diagram showing an outline of session switching operation in a fourth exemplary embodiment of the present invention.
[Fig. 29] Fig. 29 is a schematic diagram showing a first example of the data structure of a bearer management DB in the fourth exemplary embodiment.
[Fig. 30] Fig. 30 is a schematic diagram showing a second example of the data structure of the bearer management DB in the fourth exemplary embodiment.
[Fig. 31] Fig. 31 is a block diagram showing an example of the configuration of a control apparatus in a communication system according to the fourth exemplary embodiment.
[Fig. 32] Fig. 32 is a block diagram showing an example of the configuration of a control apparatus in a communication system according to a fifth exemplary embodiment of the present invention.
[Fig. 33] Fig. 33 is a schematic diagram showing an example of the configuration of a policy DB shown in Fig. 32.

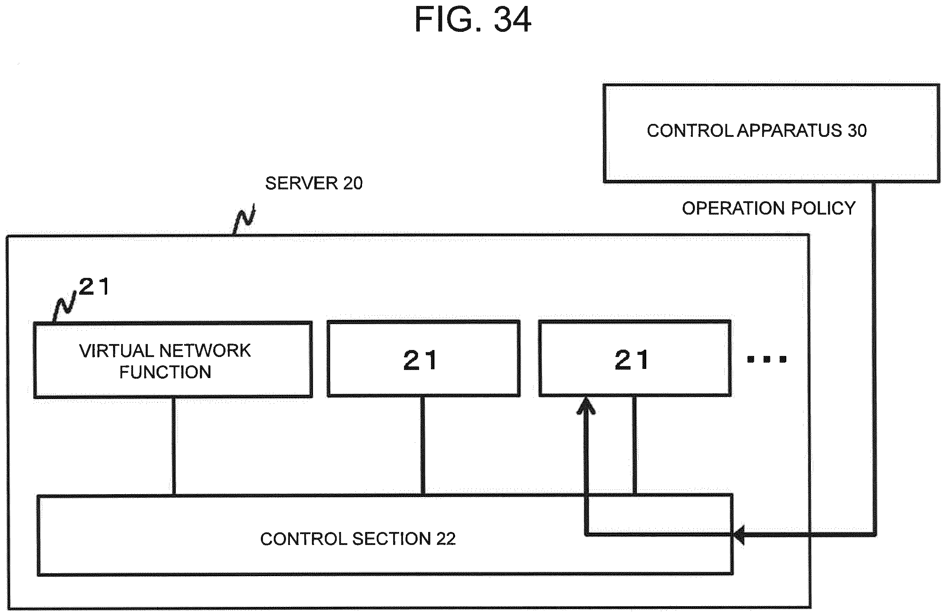

[Fig. 34] Fig. 34 is a schematic configuration diagram showing an outline of the communication system according to the fifth exemplary embodiment.

### [Detailed Description]

Hereinafter, preferred embodiments of the present invention will be described. Each embodiment is shown for illustration, and the present invention is not limited to each embodiment.

### 1. First exemplary embodiment

Hereinafter, an LTE communication system will be illustrated as a communication system according to the present exemplary embodiment. However, communication systems to which the present invention is applied are not limited to those of LTE. For example, the present invention can be also applied to GPRS (General Packet Radio Service), UMTS (Universal Mobile Telecommunication System), and the like.

### 1.1) System

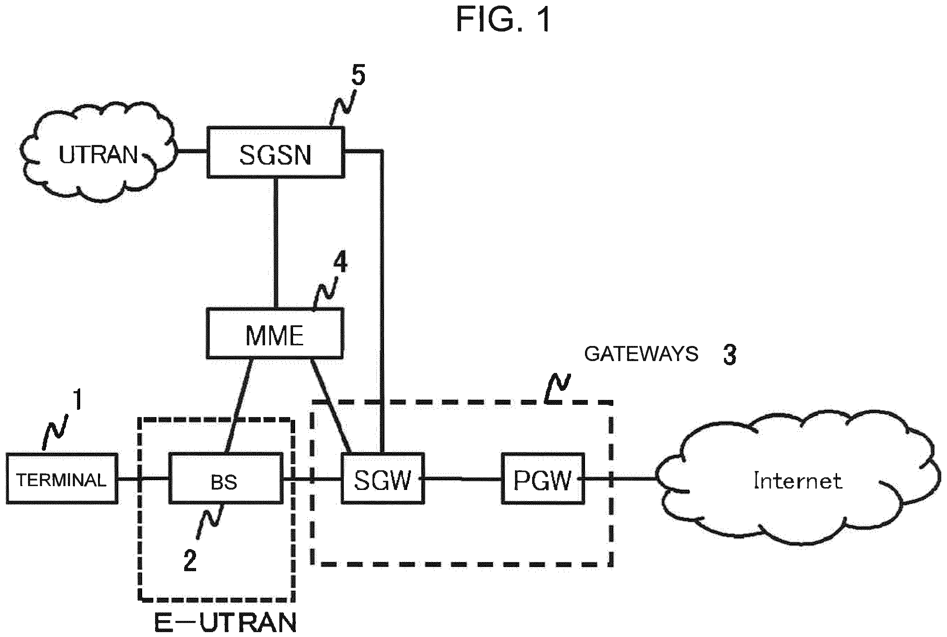

Referring to Fig. 1, a communication system according to the present exemplary embodiment includes a terminal 1 such as a mobile telephone, PC (Personal Computer), or mobile router. The communication system includes a base station (eNB) 2, gateways 3, an MME 4, and an SGSN (Serving GPRS Support Node) 5, which are a plurality of network nodes for providing communication services to the terminal 1. The gateways 3 include an S-GW (Serving Gateway) and a P-GW (PDN (Packet Data Network) Gateway). The terminal 1 connects to the base station 2 and accesses a network such as the Internet via the gateways 3. The SGSN 5 connects to a UTRAN or GERAN (GSM EDGE Radio Access Network). The S-GW connects to the UTRAN or the like via the SGSN 5.

A network node establishes a session with another network node. A session is a connection for transmitting packets between the network nodes and includes, for example, a bearer set up between the network nodes or a session for terminal control exchanged between the network nodes.

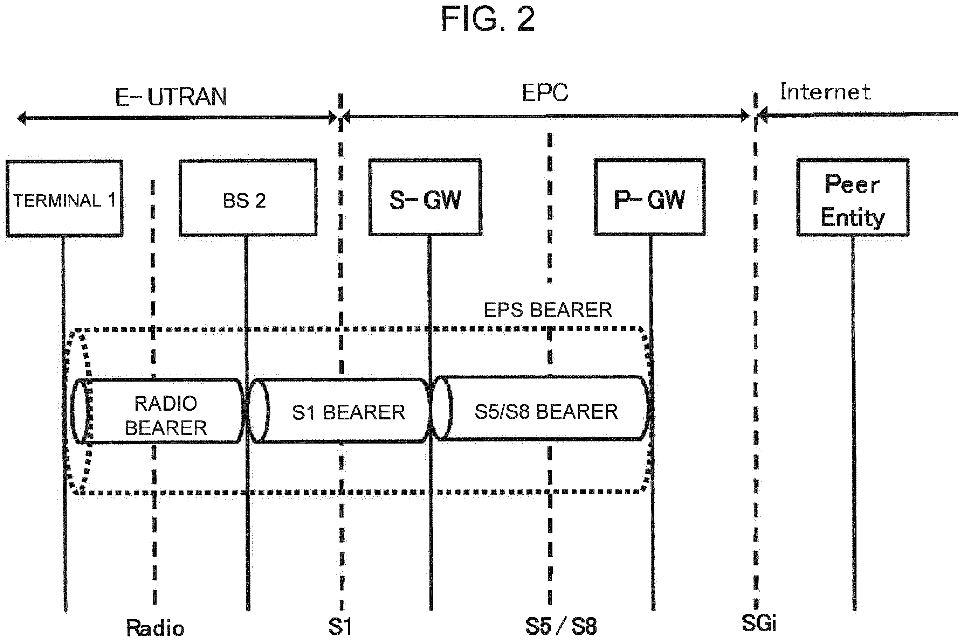

Fig. 2 shows an example of a communication path set up in the communication system shown in Fig. 1. The communication path is composed of a plurality of sessions established between network nodes. Note that in the present description, a bearer will be used as an example of a session in the following explanation unless otherwise explicitly stated. Note that the architecture shown in Fig. 2 is an example, and a communication path in the present invention include bearers of other types that are not depicted in Fig. 2. The communication system can provide communication services to the terminal 1 via a communication path that is associated with the terminal 1.

A radio bearer is set up for radio interface between the terminal 1 and the base station 2. An S1 bearer is set up for S1 interface between the base station 2 and the S-GW. An S5/S8 bearer is set up for S5/S8 interface between the S-GW and the P-GW. The communication path (EPS (Evolved Packet System) bearer) is set up with these bearers. That is, the radio bearer, S1 bearer, and S5/S8 bearer each constitute part of the communication path (EPS bearer).

### 1.2) Communication apparatus

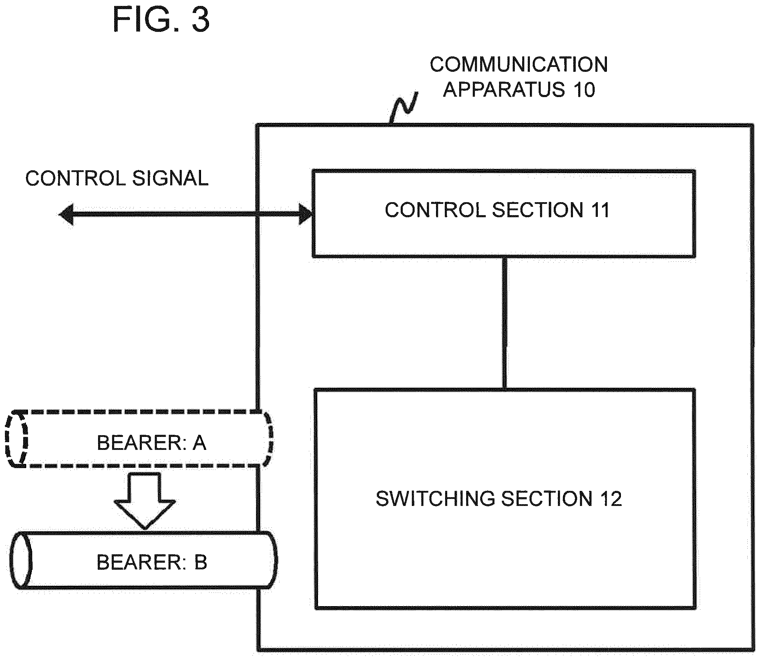

Fig. 3 shows an example of the configuration of a communication apparatus 10 according to the first exemplary embodiment. The communication apparatus 10 is any one of the network nodes in the communication system, such as, for example, the base station 2, gateways 3, MME 4, and SGSN 5 illustrated in Fig. 1. That is, in the first exemplary embodiment, the network nodes such as the base station 2, gateways 3, MME 4, and SGSN 5 each have the functions of the communication apparatus 10 illustrated in Fig. 3.

For example, the communication apparatus 10 can update a partial bearer of the EPS bearer illustrated in Fig. 2. Accordingly, when a resource is additionally installed in the communication system by installation of an additional network node or the like, the communication apparatus 10 can update only a bearer related to the additionally installed resource. Thus, even if a resource in the communication system is controlled by additional installation, removal, or the like, it is possible to avoid an interruption of communication services and the like due to re-performing the Initial Attach procedure of NPL 1.

Moreover, the communication apparatus 10 has a function of switching a bearer set up between itself and an opposite communication apparatus 10 (network node), responsive to resource control (e.g., additional installation or removal).

The communication apparatus 10 includes a control section 11 and a switching section 12, as illustrated in Fig. 3.

The switching section 12 can switch a bearer set up with an opposite network node. For example, the switching section 12 determines a bearer whose destination or source is to be changed, responsive to resource control such as additional installation, removal, or the like of a network node. Then, the control section 11, in accordance with an instruction from the switching section 12, can notify the opposite network node of information related to the bearer determined to be switched. Moreover, the switching section 12 can instruct a communication apparatus 10 which is the destination or source of a bearer determined about bearer switching to switch the bearer.

A bearer can be switched to a bearer of the same type. For example, of a plurality of types of bearers (e.g., radio bearer, S1 bearer, S5/S8 bearer, and the like) each constituting part of an EPS bearer, the switching section 12 switches a bearer set up between this communication apparatus 10 and the opposite network node to a bearer of the same type as this bearer.

As an example, when an additional P-GW is installed, the switching section 12 determines a bearer to be switched to the additional P-GW among those bearers associated with the communication apparatus 10. The switching section 12 instructs the control section 11 to notify an opposite network node (S-GW) of information related to the bearer determined to be switched. For example, the switching section 12 can instruct the control section 11 to notify the address of the additional P-GW, which is the bearer switching destination, and information including the identifier of a bearer after switching and the like.

The control section 11 exchanges a control signal with the opposite network node. For example, of a plurality of types of network nodes through which an EPS bearer passes, the control section 11 exchanges a control signal with a network node that is associated with a bearer set up between the communication apparatus 10 and the network node. For example, the control section 11 notifies the opposite network node, by using the control signal, of information related to a bearer whose destination or source is to be changed following the resource control. Notification of this information related to the bearer determined to be switched can be triggered by, for example, bearer switching.

The control section 11 can independently exchange information related to a bearer with the opposite network node, for example, without depending on the above-mentioned Initial Attach procedure of NPL 1. Accordingly, even if a bearer is switched, the communication apparatus 10 can perform bearer switching without re-performing the Initial Attach procedure. That is, the switching section 12 of the communication apparatus 10 can switch a bearer constituting part of an EPS bearer while maintaining the EPS bearer.

The control section 11 can send information related to a bearer to be switched to the opposite network node, for example, by using part of the control signals used in the Initial Attach procedure. For example, the control section 11 can use Modify Bearer Request used in the Initial Attach" procedure to send the information related to the bearer to be switched.

The control section 11 can notify a control signal to the opposite network node, for example, for each bearer. Moreover, the control section 11 can also switch a plurality of bearers collectively, for example, by notifying a control signal about the plurality of bearers to the opposite network node.

For example, when an additional S-GW is installed, the control section 11 notifies an opposite network node (P-GW) of information related to a bearer to be allocated to the additonal S-GW among bearers associated with the communication apparatus 10. For example, the control section 11 notifies information including the address of the additional S-GW, the identifier of a bearer to be allocated to the additional S-GW, and the like to the opposite network node by using a control signal. The opposite network node, based on the notified information, changes the bearer connection destination from the communication apparatus 10 that has sent the control signal to the additional S-GW.

For example, a module having function(s) of a network node is added to the communication apparatus 10, whereby an additional resource of the communication apparatus 10 is installed. Moreover, a module as described above is removed from the communication apparatus 10, whereby the resource of the communication apparatus 10 is removed. In such cases, the switching section 12 switches a bearer within the communication apparatus 10, as illustrated in Fig. 3.

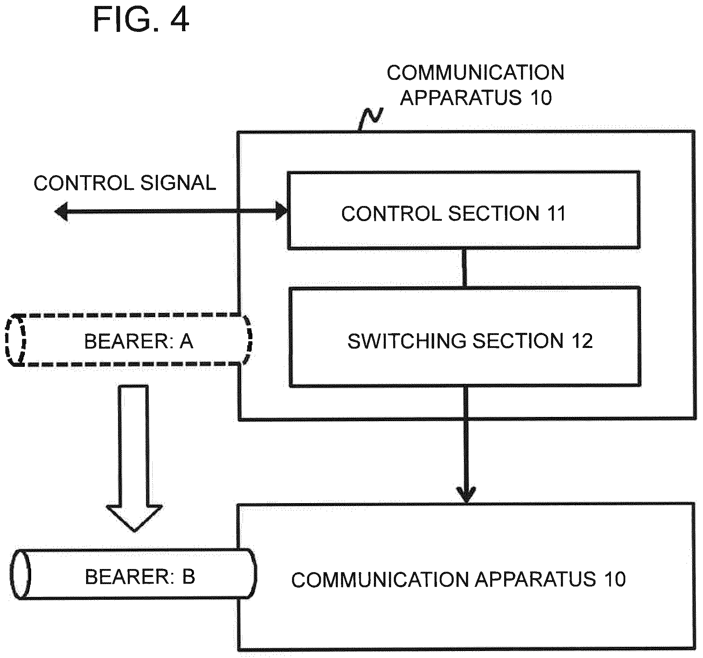

In case where a communication apparatus 10 itself is newly installed or removed, the switching section 12 switches a bearer between the communication apparatuses 10, as illustrated in Fig. 4. Moreover, in the example of Fig. 4, a session for terminal control is also switched concurrently with the bearer.

### 1.3) Session switching operation

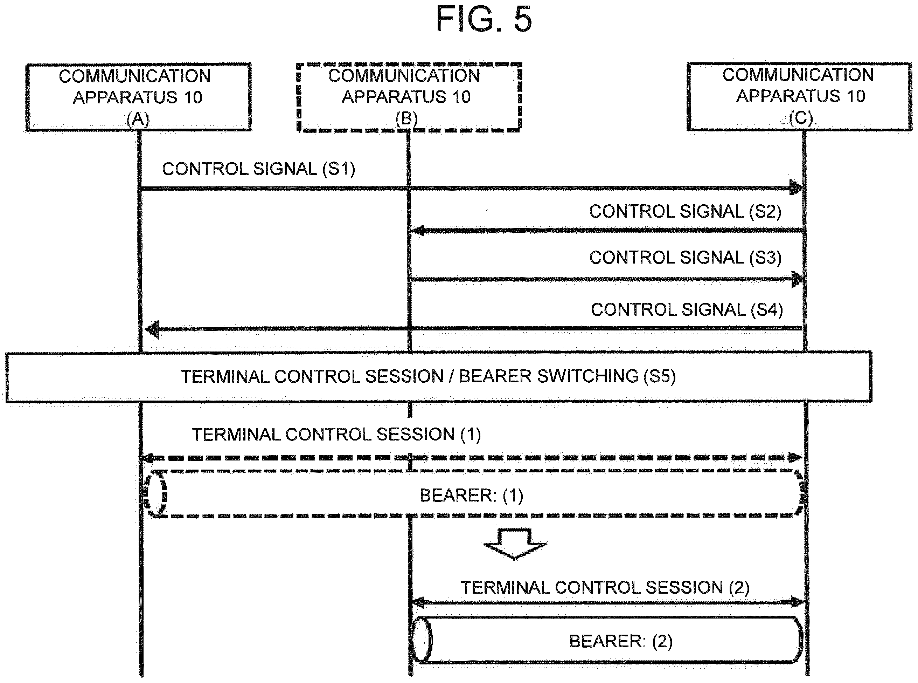

Fig. 5 shows a case as an example where a bearer set up between communication apparatuses 10(A) and (C) is switched in response to installation of an additional communication apparatus 10(B).

The communication apparatus 10(A), in response to installation of the communication apparatus 10(B), determines a bearer to be switched to the installed communication apparatus (B). The communication apparatus 10(A) notifies information related to the bearer to be switched, as a control signal, to the communication apparatus 10(C) (Operation S1). For example, the communication apparatus 10(A) notifies bearer information including the address of the communication apparatus 10(B) and the identifier of a switching-target bearer to the communication apparatus 10(C).

The communication apparatus 10(C), in response to the information notified from the communication apparatus 10(A), sends a control signal for setting up an after-switching bearer with the communication apparatus (B) (Operation S2). For example, the communication apparatus 10(C) notifies bearer information including terminal control session information and the identifier of the switching-target bearer to the communication apparatus 10(B).

The communication apparatus 10(B) sends a response to the information notified from the communication apparatus 10(C) (Operation S3). For example, the communication apparatus 10(B) notifies bearer information including the terminal control session information and the identifier of the switching-target bearer to the communication apparatus 10(C).

Then, for example, the communication apparatus 10(C) sends a response to the information notified from the communication apparatus 10(A) (Operation S4).

According to the exchanges of the control signals, the communication apparatuses 10(A) to 10(C) perform terminal control session switching and bearer switching. In the example of Fig. 5, the terminal control session (1) and the bearer (1) established between the communication apparatuses (A) and (C) are switched to the terminal control session (2) and the bearer (2) between the communication apparatuses (B) and (C). For example, the communication apparatus 10(C) changes the destination of the bearer from the communication apparatus 10(A) to (B), based on the information notified from the communication apparatus 10(A).

According to the first exemplary embodiment, since the communication apparatus 10 can switch only a bearer between itself and the opposite network node as in the above-described example, it is possible to avoid an interruption of communication services and the like due to re-performing a bearer configuration procedure.

### 2. Second exemplary embodiment

According to a second exemplary embodiment of the present invention, the functions of network nodes are provided on virtual machines, whereby resource control in a communication system can be performed by additional installation, removal, or the like of a virtual machine. Accordingly, resource control in the communication system can be performed by using software, making it possible to perform resource control more easily and more flexibly. The technique according to the second exemplary embodiment is applicable to the above-described first exemplary embodiment and any of the under-described exemplary embodiments.

### 2.1) Example 1

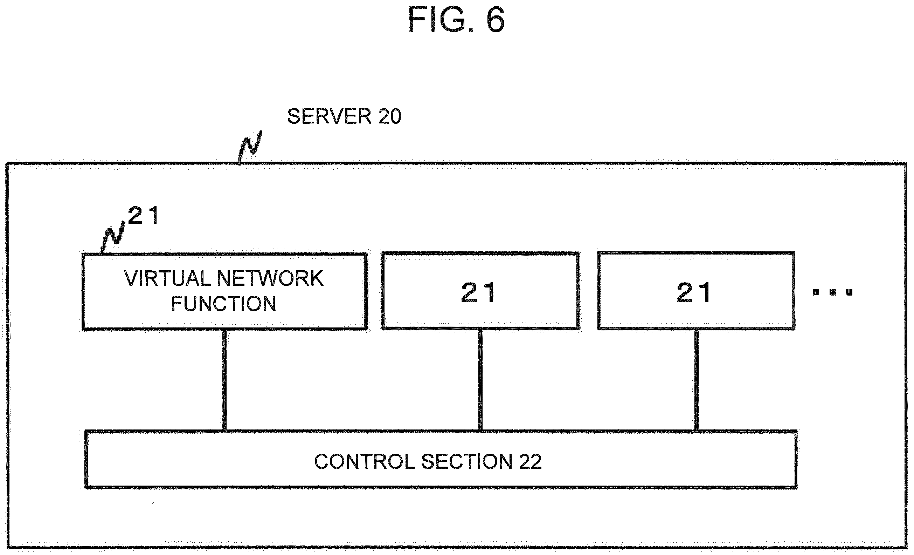

Hereafter, Example 1 of the second exemplary embodiment will be described in detail with reference to Figs. 6 to 11.

Fig. 6 shows an example of the configuration of a server 20 that can operate the functions of network nodes such as a base station 2, gateways 3, and an MME 4 on virtual machines. The server 20 includes virtual network functions (VNFs: Virtual Network Functions) 21 corresponding to the functions of network nodes, and a control section 22.

For example, each VNF 21 has functions similar to those of the communication apparatus 10 according to the above-described first exemplary embodiment, that is, the functions of the control section 11 and switching section 12. These functions are as described in the above first exemplary embodiment, and therefore a detailed description thereof will be omitted.

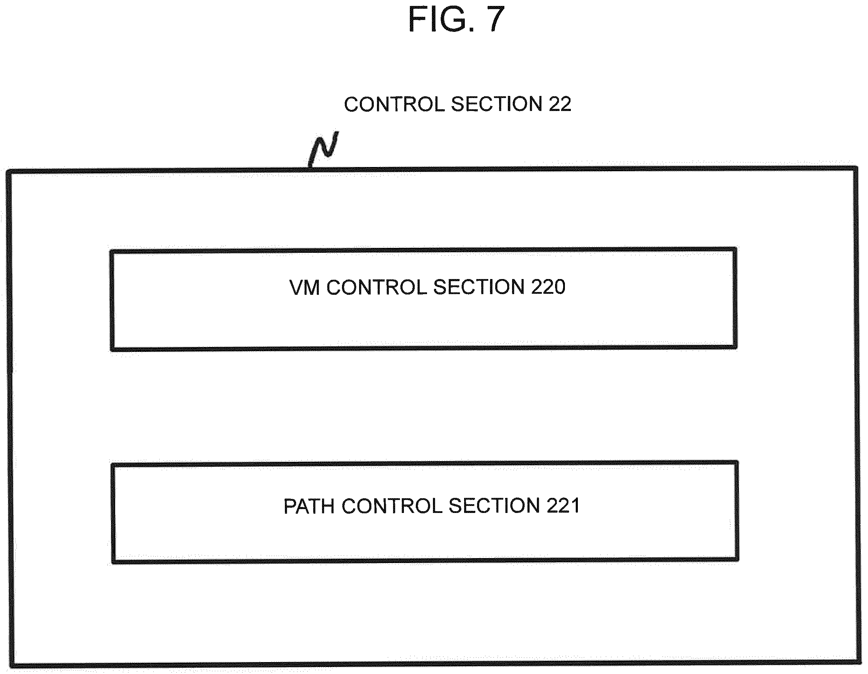

The control section 22 can operate VNFs 21 having the functions of a network node on virtual machines. The control section 22 includes a VM (Virtual Machine) control section 220 and a path control section 221, as illustrated in Fig. 7.

The VM control section 220 can operate a VNF 21 on a virtual machine. Each VNF 21 has a function of notifying a control signal for bearer switching to an opposite VNF 21 or communication apparatus 10 (function corresponding to the above-described control section 11).

For example, the VM control section 220 can perform virtual machine resource control (e.g., at least one of activation, deletion, and deactivation of a virtual machine). For example, the VM control section 220 can activate a new virtual machine on another server 20.

The VM control section 220 can also control activation, deactivation, or the like of a virtual machine, depending on the status of the communication system. For example, the VM control section 220 dynamically performs activation, deactivation, or the like of a VNF 21, depending on the communication volume in the communication system, the congestion status thereof, the load on the server 20, or the like. Moreover, for example, the VM control section 220 performs control such as activation of a new virtual machine, depending on the load on a virtual machine executing a VNF 21.

The path control section 221 forwards a received signal (a packet or the like) to a VNF 21 corresponding to a bearer to which this signal belong. For example, the path control section 221 can forward a control signal sent by the VNF 21 to a network node to which a bearer is switched.

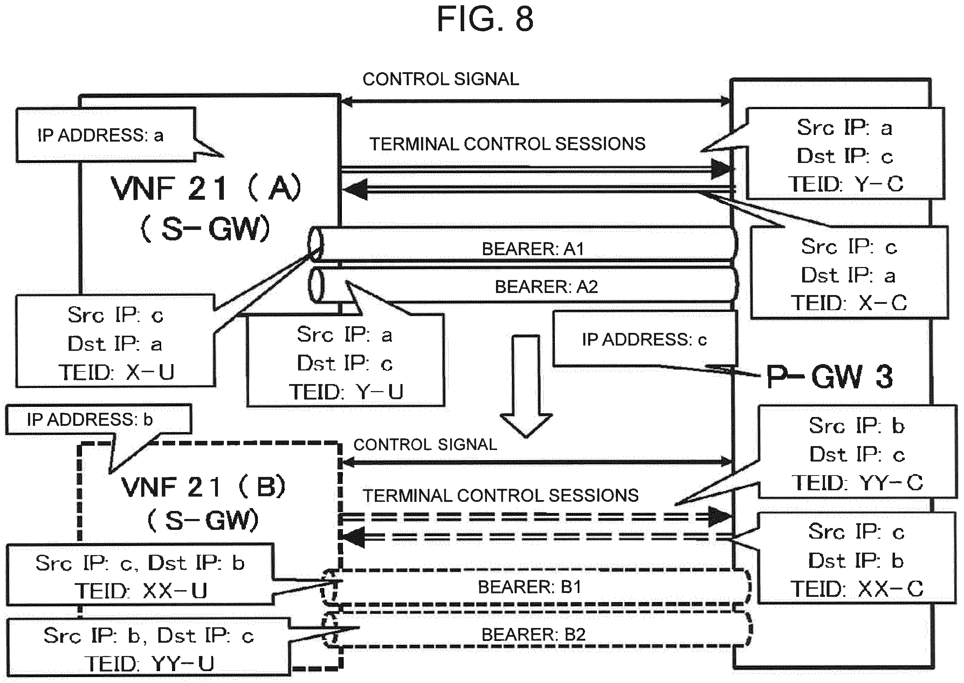

Referring to Fig. 8, a description will be given of an example in which sessions for terminal control and bearers (bearers A1 and A2) associated with a VNF 21 (A) are switched in response to additional installation of a VNF 21 (B) having S-GW function. Note that in Fig. 8, a P-GW 3 is configured as the communication apparatus 10 according to the above-described first exemplary embodiment, but the present invention is not limited to the example of Fig. 8. The P-GW 3, which is an opposite P-GW of the VNFs 21, may be configured as a virtual network function which operates on a virtual machine.

In the example of Fig. 8, the IP address of the VNF 21 (A) is "a", and the IP address of the P-GW, which is the opposite network node, is "c". The bearer identifiers (TEIDs: Tunnel Endpoint Identifiers) of the bearers A1 and A2 between the VNF 21 (A) and the P-GW 3 are "X-U" and "Y-U", respectively. Moreover, the identifiers (TEIDs) of the sessions for terminal control between the VNF 21 (A) and the P-GW 3 are "X-C" and "Y-C", respectively. The IP address of the additionally installed VNF 21(B) is "b".

For example, the VNF 21 (A) notifies a control signal to the opposite communication apparatus 10 for each bearer to be switched. For example, the VNF 21 (A) notifies the opposite P-GW, by using a control signal, of information including the address of a VNF 21 that is the switching destination of a bearer to be switched, the identifier (e.g., IMSI) of a terminal that is using the bearer to be switched, and a communication path identifier (e.g., EPS Bearer ID) corresponding to the bearer to be switched. The P-GW 3 newly sets up sessions with the VNF 21(B) (sessions for terminal control and bearers B1 and B2 in Fig. 8) based on the notified information.

The P-GW 3 notifies the VNF 21 (B), by using a control signal, of information including the IP address of the P-GW 3, the identifier of the terminal that is using the bearer to be switched, the identifier of a session for controlling the terminal that is using the bearer to be switched, and a bearer identifier to be allocated to a bearer after switching. Similarly, the VNF 21(B) notifies the P-GW 3, by using a control signal, of information including the IP address of the VNF 21 (B), the identifier of a session for controlling the terminal that is using the bearer to be switched, and a bearer identifier to be allocated to a bearer after switching.

Fig. 8 shows an example in which sessions and bearers are switched from the VNF 21 (A) to the VNF 21 (B), but the present invention is not limited to the example of Fig. 8. For example, sessions and bearers may be switched from a communication apparatus 10 (hardware) to a VNF 21 (software) (the same will apply to examples described hereinafter).

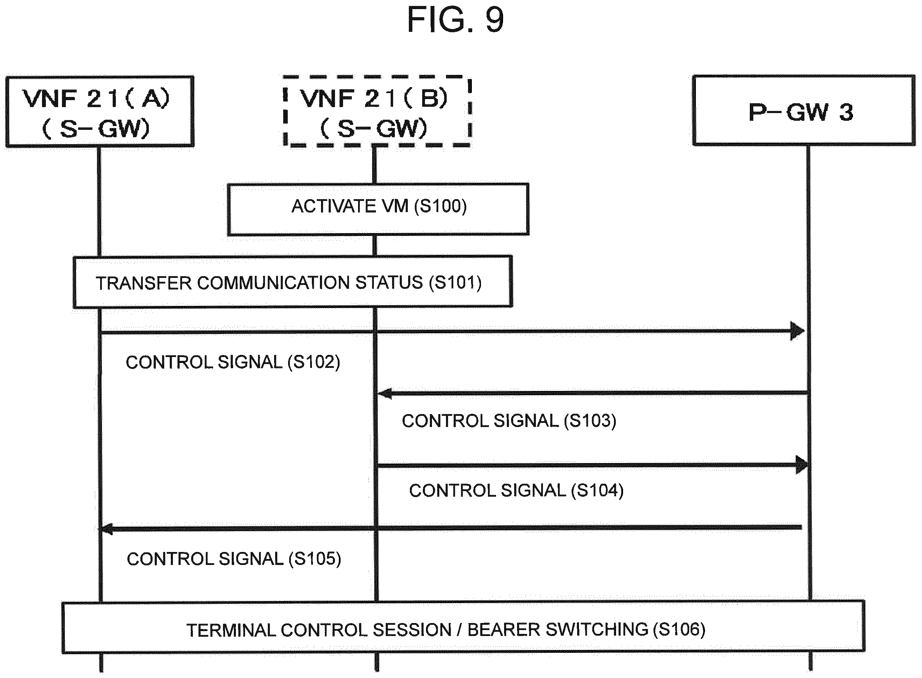

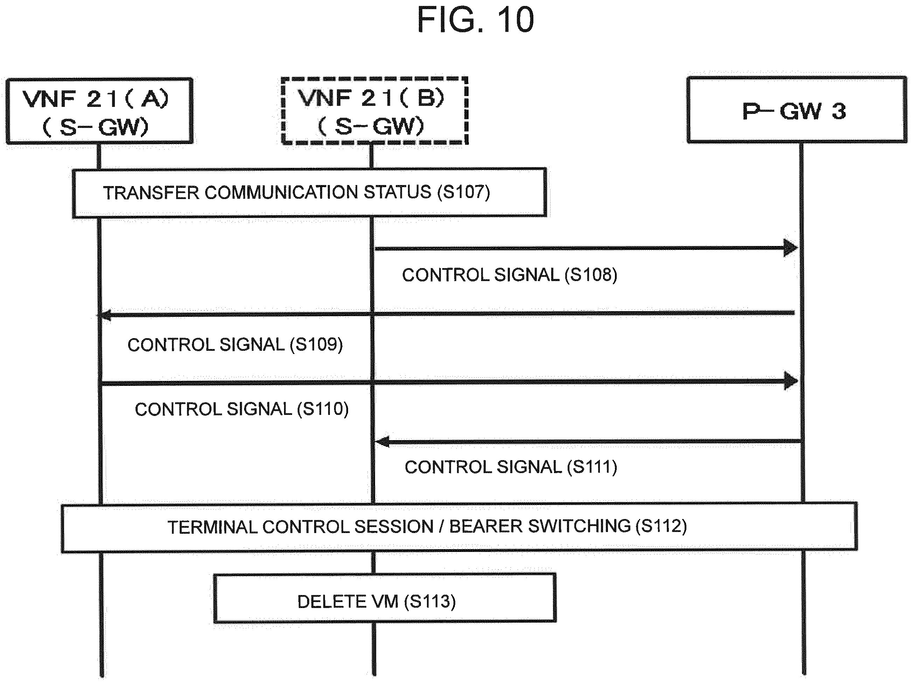

Next, an example of operation in Example1 will be described with reference to Figs. 9 and 10.

Fig. 9 shows an example of operation for switching a bearer (S5/S8 bearer) between a virtual S-GW configured as a VNF 21 and the P-GW. Note that the present invention is not limited to the example of Fig. 9. The operation illustrated in Fig. 9 is also applicable to switching of other bearers such as, for example, S1-U bearer between the base station and the S-GW. Moreover, it is also applicable to switching of terminal control session information such as S11 interface between the MME 4 and the S-GW and S1 interface between the base station 2 and the MME 4.

Referring to Fig. 9, when a virtual machine corresponding to the VNF 21(B) is activated (Operation S100), for example, the VNF 21 (A), in response to it, transfers to the activated VNF 21 (B) communication status related to a bearer to be switched to the VNF 21(B) (Operation S101).

The VNF 21(A) sends a control signal to the P-GW 3 (Operation S102). For example, the VNF 21 (A) notifies the P-GW of information, as the control signal, including the IP address of the VNF 21(B) to which the bearer is to be switched, the identifier of a terminal that is using the bearer to be switched, and a communication path identifier corresponding to the bearer to be switched. For example, the VNF 21(A) can use Modify Bearer Request or Create Session Request in the Initial Attach procedure disclosed in subchapter 5.3.2 of 3GPP technical standard specifications (TS23.401) to notify the control signal. Note that each VNF 21 can issue only Modify Bearer Request or Create Session Request, which are part of the Initial Attach procedure, without issuing other messages in this procedure. Note that each VNF 21 may notify a control signal by using another message.

The VNF 21 (A) can notify information related to a plurality of bearers by using a control signal. For example, the VNF 21(A) notifies CSID (Connection Set Identifier) for identifying a PDN connection group, as information related to a plurality of bearers, by using a control signal.

Each VNF 21 can determine whether or not to issue a control signal for bearer switching, for example, based on the load on a virtual machine or the load on the server 20. For example, a VNF 21 can issue a control signal for switching a bearer to another VNF 21 when the load on its virtual machine is higher than a predetermined threshold or when the load on the server 20 operating its virtual machine is higher than a predetermined threshold. In the example of Fig. 9, for example, since the load on the virtual machine operating the VNF 21 (A) is higher than a predetermined threshold, the VNF 21 (A) issues a control signal for switching a bearer to the newly activated VNF 21 (B). The VNF 21 (A) can determine the number of bearers to be switched to the VNF 21 (B), for example, based on the load on its virtual machine.

The P-GW 3 exchanges control signals to switch the terminal control session and bearer which have been set up between the VNF 21 (A) and the P-GW 3, to a newly setup terminal control session and bearer between the VNF 21 (B) and the P-GW 3 (Operation S103 to S104). Thereafter, the P-GW 3 returns a response to the control signal received in Operation S102 to the VNF 21 (A) (Operation S105).

The bearer set up between the VNF 21 (A) and the P-GW 3 is switched to the bearer newly set up between the VNF 21 (B) and the P-GW 3 (Operation S106).

Fig. 10 shows an example of operation for switching bearers (S5/S8 bearer) between a virtual S-GW configured as a VNF 21 and the P-GW, here, when the VNF 21 (B) is deleted. Note that the present invention is not limited to the example of Fig. 10. The operation illustrated in Fig. 10 is also applicable to switching of other bearers such as, for example, S1-U bearer between the base station and the S-GW. Moreover, it is also applicable to switching of UE control session information such as S11 interface between the MME 4 and the S-GW and S1 interface between the base station 2 and the MME 4.

For example, the VNF 21 (B) to be deleted transfers communication status related to all bearers set up in the VNF 21 (B) to another VNF (VNF 21 (A) in the example of Fig. 10) (Operation S107).

For example, the VNF 21 (B) sends a control signal to the P-GW 3 for each bearer set up in the VNF 21(B) (Operation S108). The control signal sent by the VNF 21 (B) is similar to the control signal at Operation S102 in Fig. 9 described above, and therefore a detailed description thereof will be omitted.

The P-GW 3 exchanges control signals to change the terminal control sessions and bearers which has been set up between the VNF 21 (B) and the P-GW 3, to newly setup terminal control sessions and bearers between the VNF 21 (A) and the P-GW 3 (Operation S109 to S110). Thereafter, the P-GW 3 returns a response to the control signals in Operation S108 to the VNF 21 (B) (Operation S111). The control signals at Operations S109 to S111 in Fig. 10 are similar to those of Operations S103 to S105 in Fig. 9 described above, and therefore a detailed description thereof will be omitted.

The bearers set up in the VNF 21 (B) to be deleted are switched to the VNF 21 (A) (Operation S112). For example, the VNF 21 (B) is deleted after all bearers are switched (Operation S113).

### 2.2) Example 2

In Example 1 as described above, an example is described in which a VNF 21 is constructed for each network node. Example 2 shows an example in which a VNF 21 is constructed for each detailed function included in a network node.

The VM control section 220 can operate a VNF 21 for each detailed function included in a network node. For example, the network nodes illustrated in Fig. 1 each have a plurality of functions related to signal processing, as listed below as examples. For example, the VM control section 220 can operate a VNF 21 for each individual function illustrated below.

### Gateway 3 (P-GW):

- Function of processing packets (U-Plane function)
- Function of processing control signaling (C-Plane function)
- Function of managing charging status based on communication (PCEF: Policy and Charging Enforcement Function)
- Function of controlling policies related to QoS (PCRF: Policy and Charging Rule Function) and the like
- Lawful interception (LI) function for intercepting communication

### Gateway 3 (S-GW):

- Function of processing packets (U-Plane function)
- Function of processing control signaling (C-Plane function)

### MME 4:

- Function of processing control signaling (C-Plane function): For example, setup/release of a session for communication, handover control, and the like
- Function of managing subscriber information in the communication system in cooperation with HHS (Home Subscriber Server)

### Base station 2:

- Function of processing digital baseband signals
- Function of processing analog Radio Frequency (RF) signals

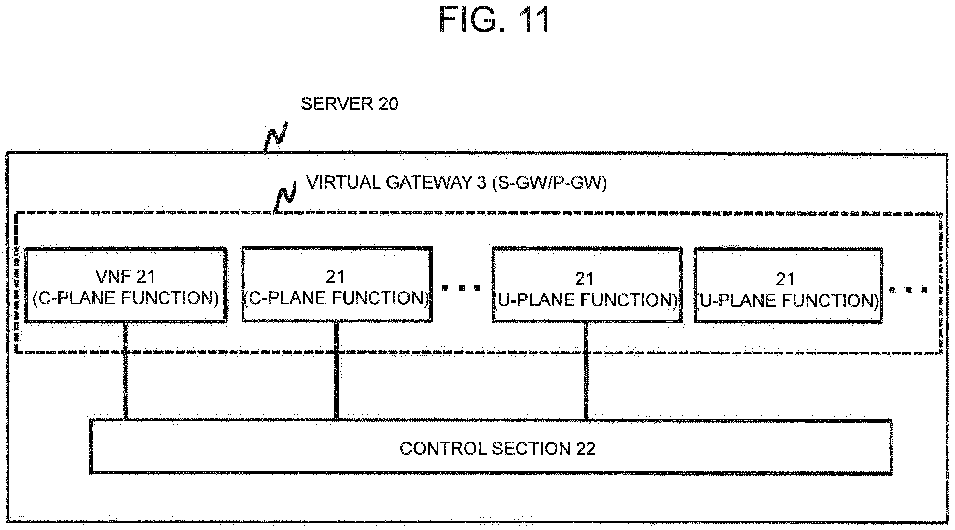

Fig. 11 shows an example of the configuration of a server 20 according to Example 2. The control section 22 of the server 20 can construct a VNF 21 for each individual function included in a network node. In the example of Fig. 11, a virtual gateway 3 (S-GW or P-GW) is configured with VNFs 21 that correspond to C-Plane function and U-Plane function, respectively.

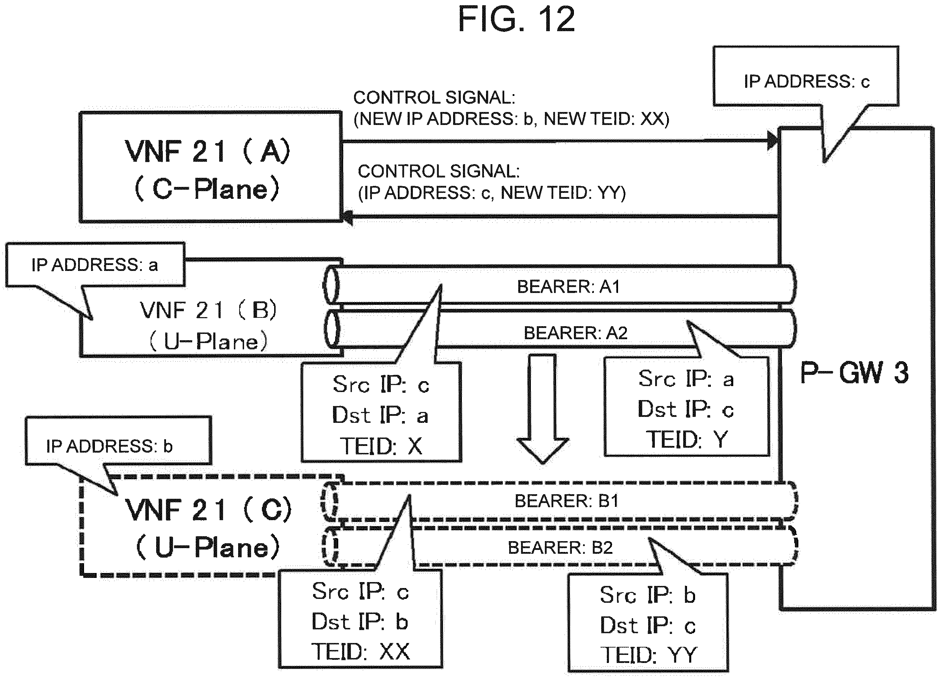

Fig. 12 shows an example in which bearers (bearers A1 and A2) corresponding to a VNF 21 (B) are switched in response to installation of an additional VNF 21 (C) having U-Plane function.

In the example of Fig. 12, a VNF 21 (A) having C-Plane function exchanges control signals with an opposite P-GW 3. Moreover, the VNF 21(A) having C-Plane function can control bearer switching between VNF 21 (B) and VNF21(C) each having U-Plane functions. The other operations are similar to the example described in Fig. 8, and therefore a detailed description thereof will be omitted.

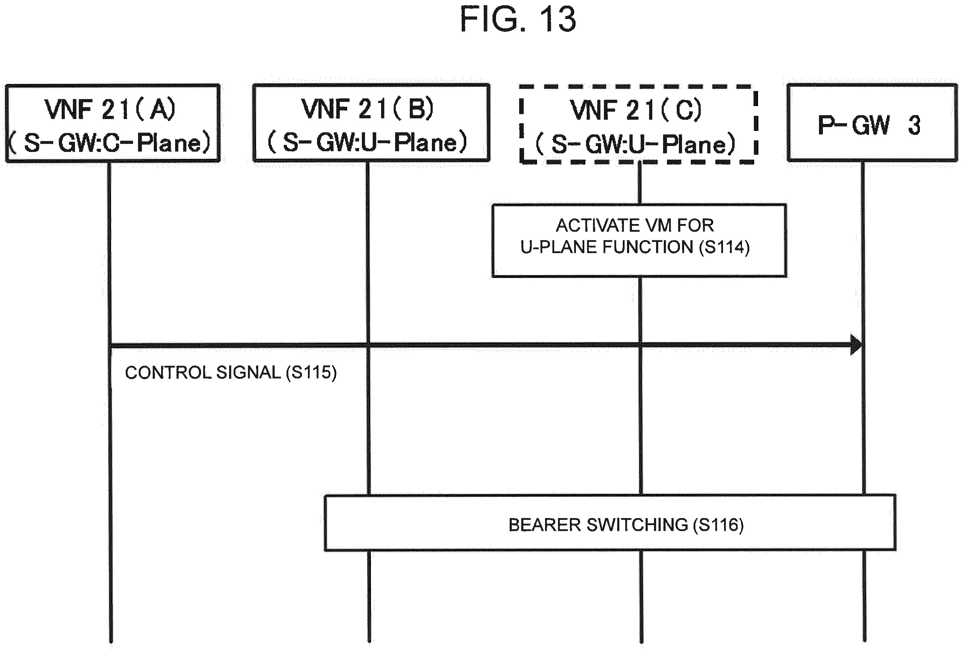

Fig. 13 shows an example of operation in the case where a virtual machine corresponding to the VNF 21 (C) having U-Plane function of S-GW is activated.

A virtual machine (VM) corresponding to the VNF 21 (C) having U-Plane function is activated (Operation S114). The VNF 21(B) may transfer communication status retained by the VNF 21 (B) to the activated VNF 21 (C).

The VNF 21 (A) having C-Plane function of S-GW notifies the P-GW 3 of a control signal related to a bearer to be switched from the VNF 21 (B) to the activated VNF 21 (C) (Operation S115). For example, the VNF 21 (A) notifies a control signal for each bearer to be switched to the VNF 21 (C). For example, the VNF 21 (A) notifies the P-GW 3, by using a control signal, of information including the address of the VNF 21(C) and a TEID after switching. It is also possible that the VNF 21(A) notifies the P-GW 3 of information related to a plurality of bearers by using a control signal.

The bearer set up between the VNF 21 (B) and the P-GW 3 is switched to a bearer between the VNF 21(C) and the P-GW 3 (Operation S116). Through the operation in S116, a bearer for downlink (from the P-GW 3 to the VNF 21 (C)) is set up between the VNF 21 (C) and the P-GW 3. For uplink bearer switching, the P-GW 3 may send a control signal to the VNF 21(A) having C-Plane function. For example, the P-GW 3 may send information including the IP address of the P-GW 3 and the TEID of a bearer for uplink by using the control signal. However, it is optional that the opposite network node, P-GW 3, sends a control signal to the VNF 21 (A).

### 2.3) Example 3

In Example 1 above, an example is described in which communication status is transferred when a virtual machine corresponding to a VNF 21 is activated, deactivated, or the like (see Figs. 9 and 10). Example 3 shows an example of a configuration that enables a VNF 21 to avoid transferring communication status. The VNF 21 avoids transferring communication status, resulting in reduced time required from activation, deactivation, or the like of a virtual machine until bearer switching. Time taken before bearer switching is reduced, whereby the performance of a communication system is enhanced.

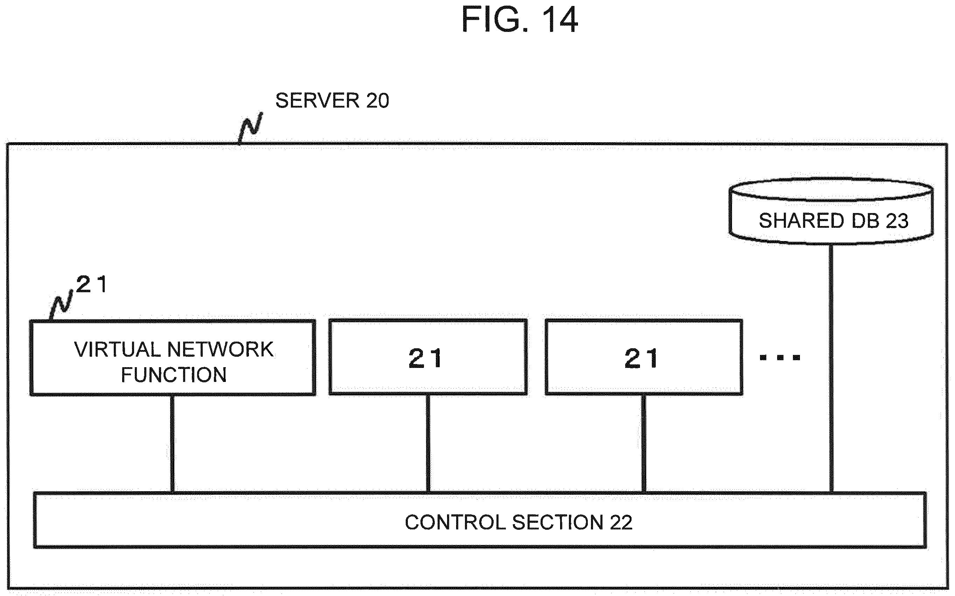

As illustrated in Fig. 14, a server 20 includes a shared DB 23, which is shared among a plurality of VNFs 21. The use of the shared DB 23 makes it possible to centrally manage communication statuses related to the individual VNFs 21. That is, each VNF 21 does not directly manage communication status but stores it in the shared DB 23. For example, when communication status is changed as a result of signal processing, each VNF 21 stores the changed communication status in the shared DB 23. The shared DB 23 may be an external storage that can be accessed by the server 20.

For example, each VNF 21 can access the shared DB 23 via the path control section 221 of the control section 22. The path control section 221 can connect each VNF 21 and the shared DB 23. Each VNF 21 can access the shared DB 23 via the path control section 221 and manage communication status by using the shared DB 23.

For communication status, for example, information indicating the status of a bearer such as a bearer context or the like is stored. Bearer contexts are described in, for example, subchapter 5.7 of 3GPP technical specifications (TS23.401 V12.3.0).

Example 3 is also applicable to the above-described first exemplary embodiment. For example, each communication apparatus 10 stores communication status in the shared DB 23, whereby each communication apparatus 10 can avoid transferring the communication status to another communication apparatus 10.

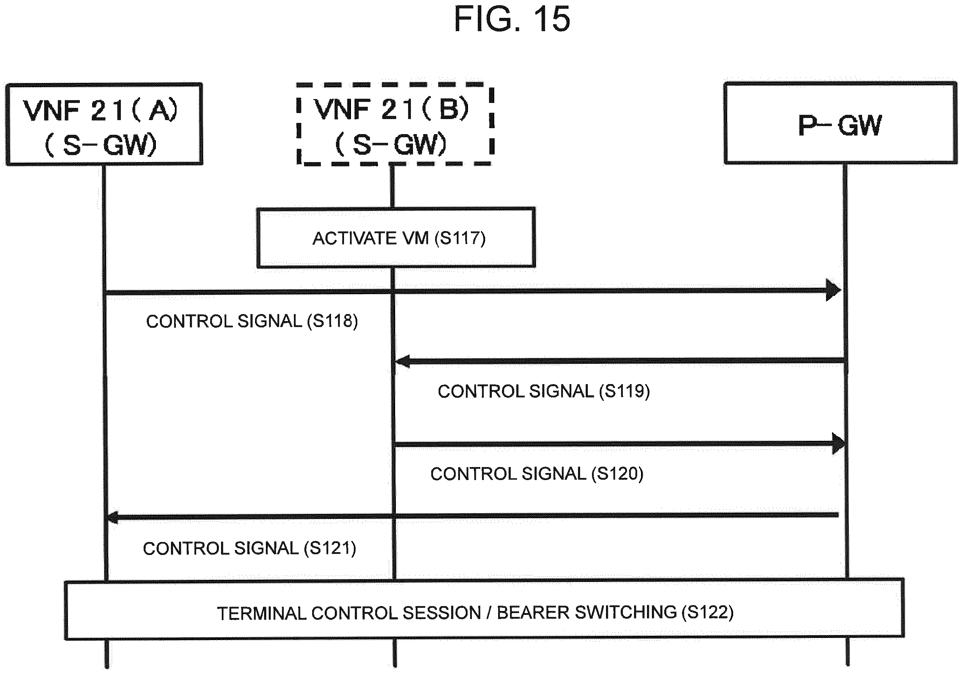

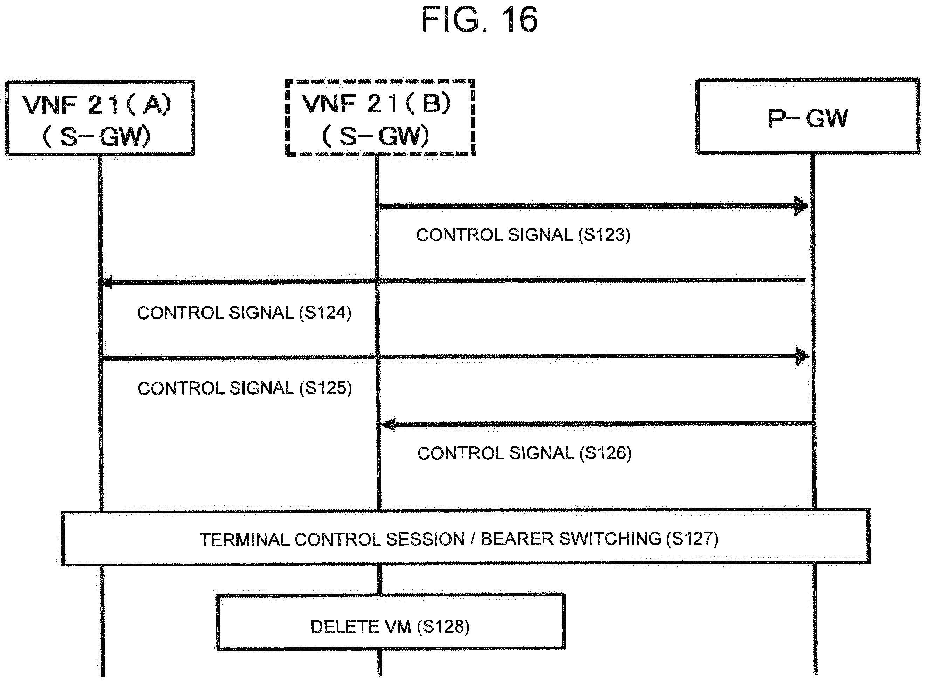

Referring to Figs. 15 and 16, in bearer switching operation according to Example 3, the operation for transferring communication status at Operation S101 in Fig. 9 and at Operation S107 in Fig. 10 is avoided. The other operations, specifically, Operations S117 to S122 in Fig. 15 and Operations S123 to S128 in Fig. 16 are as described at Operations S100 and S102 to S106 in Fig. 9 and at Operations S108 to S113 in Fig. 10, respectively, and therefore a detailed description thereof will be omitted.

### 2.4) Example 4

A base station has a function of performing digital baseband signal processing and a function of performing analog RF (Radio Frequency) signal processing. For a base station in a communication system according to Example 4, the baseband signal processing function and the radio signal processing function are separated.

### <System architecture>

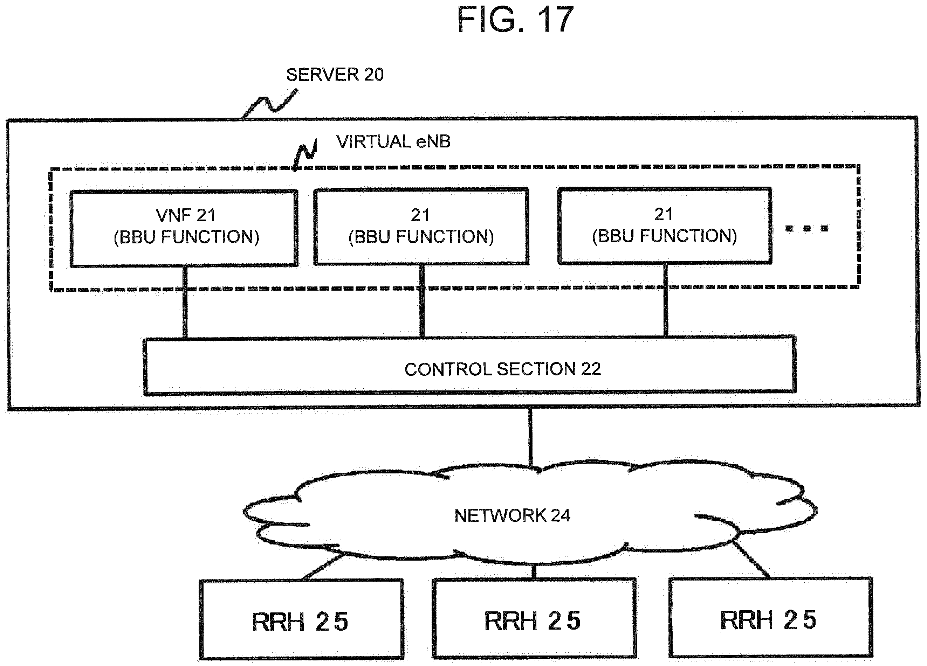

As illustrated in Fig. 17, in the communication system according to Example 4, the base station 2 is separated into a baseband processing section 21 (hereinafter, BBU: Base Band Unit) and a radio section 25 (hereinafter, RRH: Remote Radio Head). The BBU 21 and RRH 25 are connected to each other via a network 24.

In Example 4, a VNF 21 operated by a server 20 provides the BBU function.

The VNF 21 having the BBU function is connected to an upper-order network (e.g., a backhaul network or core network of a carrier) and performs controlling and monitoring the radio base station and processing the digital baseband signal. The digital baseband signal processing includes layer-2 signal processing and layer-1 (physical layer) signal processing. The layer-2 signal processing includes at least one of:
(i) data compression/decompression;
(ii) data encryption;
(iii) addition/deletion of a layer-2 header;
(iv) data segmentation/concatenation; and
(v) assembly/disassembly of a forwarding format through data multiplexing/demultiplexing.

For example, in case of E-UTRA, the layer-2 signal processing includes Radio Link Control (RLC) and Media Access Control (MAC) processing. The physical layer signal processing includes channel coding/decoding, modulation/demodulation, spreading/de-spreading, resource mapping, generation of OFDM symbol data (baseband OFDM signal) through Inverse Fast Fourier Transform (IFFT), and the like.

The RRH 25 is in charge of analog RF signal processing and provides an air interface to a mobile station. The analog RF signal processing includes D/A conversion, A/D conversion, frequency up-conversion, frequency down-conversion, amplification, and the like.

The server 20 in Example 4 includes VNFs 21 having the BBU function and the control section 22.

The control section 22 of the server 20 can operate a VNF 21 having BBU function. The server 20 is connected to RRHs 25 via the network 24. For example, the path control section 221 of the control section 22 can configure a link between a VNF 21 having BBU function and an RRH 25. For example, the path control section 221 can configure a peer-to-peer link between a VNF 21 and an RRH 25.

The control section 22 may operate a VNF 21 having C-Plane function of BBU and a VNF 21 having U-Plane function of BBU.

### <Operation>

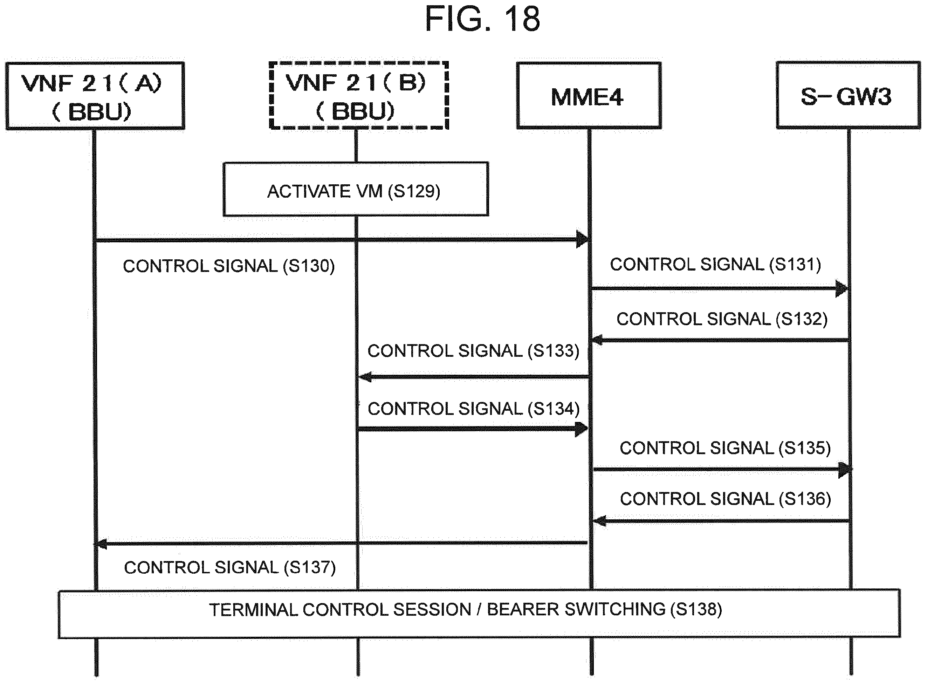

Fig. 18 shows an example in case where a VNF 21(B) having BBU function is activated.

Referring to Fig. 18, in response to activation of the VNF 21(B) (Operation S129), a VNF 21(A) sends a control signal to the MME 4 (Operation S130). For example, the VNF 21 (A) sends information related to a bearer to be switched from the VNF 21 (A) to VNF 21 (B) to the MME 4 by using the control signal. The VNF 21 (A) can send a control signal for each bearer to be switched. Moreover, the VNF 21(A) can send information related to a plurality of bearers by using a control signal. For example, the information sent in Operation S130 includes the IP address of the switching-destination VNF 21(B) and a TEID after switching.

The MME 4 sends a control signal to the S-GW 3 based on the information received from the VNF 21 (A) (Operation S131). For example, the MME 4 requests the S-GW 3, by using the control signal, for information related to the bearer (in the direction: VNF 21(B) -> S-GW 3) to be switched from the VNF 21(A) to VNF 21(B). The MME 4 can send a control signal for each bearer to be switched. Moreover, the MME 4 can request information related to a plurality of bearers by using a control signal.

In response to the request from the MME 4, the S-GW 3 sends information related to the bearer (in the direction: VNF 21(B) -> S-GW 3) to be switched from the VNF 21 (A) to VNF 21 (B) to the MME 4 (Operation S132). For example, the S-GW 3 sends information including the IP address of the S-GW 3 and the TEID of a bearer in the direction from VNF 21 (B) to S-GW 3 to the MME 4 by using a control signal. The MME 4 sends the received information to the VNF 21 (B) by using a control signal (Operation S133).

The VNF 21 (B) sends information related to the bearer (in the direction: S-GW 3 -> VNF 21(B)) to be switched from the VNF 21(A) to VNF 21(B) to the MME 4 (Operation S134). For example, the VNF 21(B) sends information including the IP address of the VNF 21(B) and the TEID of a bearer in the direction from S-GW 3 to VNF 21 (B) to the MME 4 by using a control signal.

The MME 4 sends the information received from the VNF 21 (B) to the S-GW 3 by using a control signal (Operation S135). The S-GW 3 sends a response to the information received in Operation S135 to the MME 4 (Operation S136). The MME 4 sends a control signal to the VNF 21 (A) based on the information received from the S-GW 3 (Operation S137).

When the VNF 21 (A) thus receives the control signal sent in Operation S137 as a response to the control signal sent in Operation S130, the bearers set up between the VNF 21 (A) and the S-GW 3 are switched to bearers newly set up between the VNF 21(B) and the S-GW 3 (Operation S138).

### 2.5) Example 5

In Example 5, which will be described below, a routing table of a router on the upper-order network (e.g., the Internet) side is updated according to resource control for a VNF 21 having P-GW function.

According to Example 5, since the router on the upper-order network side can be controlled according to activation, deactivation, or the like of a VNF 21 having P-GW function, it is possible to avoid an interruption and the like of downlink traffic from the higher-order network side.

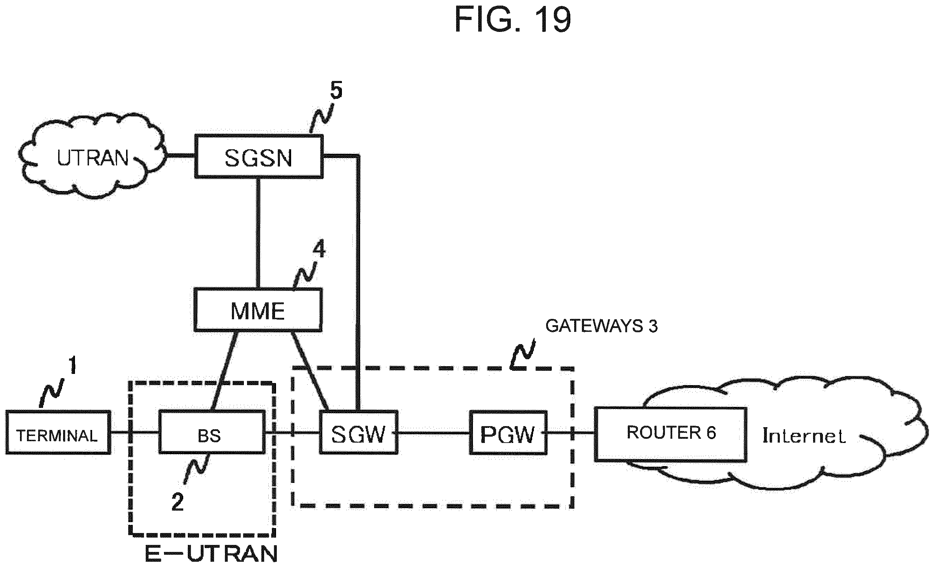

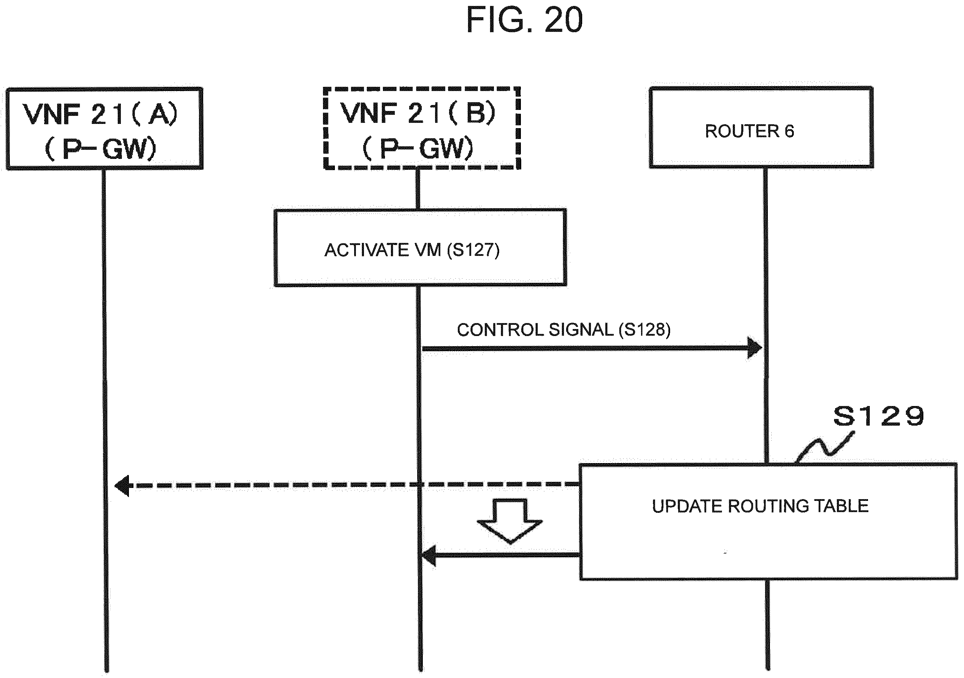

In a communication system according to Example 5 illustrated in Fig. 19, a router 6 in an upper-order network can be controlled according to resource control for a VNF 21 having P-GW function. Hereinafter, operation in Example 5 will be described with reference to Fig. 20.

A sequence illustrated in Fig. 20 shows an example of operation in the case where a VNF 21 (B) having P-GW function is activated and a bearer is switched from a VNF 21(A) to the VNF 21(B).

Referring to Fig. 20, it is assumed that the VNF 21 (B) is activated (Operation S127) and that at least part of bearers in the VNF 21(A) is switched to the activated VNF 21 (B). Operation for bearer switching is similar to the operation described in the other Examples above, and therefore a detailed description thereof will be omitted.

The VNF 21(A) sends a control signal to the router 6 (Operation S128). The VNF 21 (A) may send a control signal for updating the routing table to the router 6 before performing bearer switching. Note that it is also possible that the VNF 21 (B) sends a control signal to the router 6 after bearer switching.

For example, the VNF 21 (A) sends information, as the control signal, including the address of a UE associated with the bearer and the address of a virtual P-GW to be associated with this UE (VNF 21 (B) in the example of Fig. 20).

The router 6 updates the routing table based on the received control signal so that traffic addressed to the UE will be forwarded to the virtual P-GW which is the destination to which the bearer is switched (VNF 21 (B) in the example of Fig. 20) (Operation S129). The router 6 forwards traffic based on the updated routing table.

### 2.6) Example 6

Example 6 shows an example in which a correspondence between a VNF 21 having P-GW function and a PCRF 7 is changed according to resource control for the VNF 21.

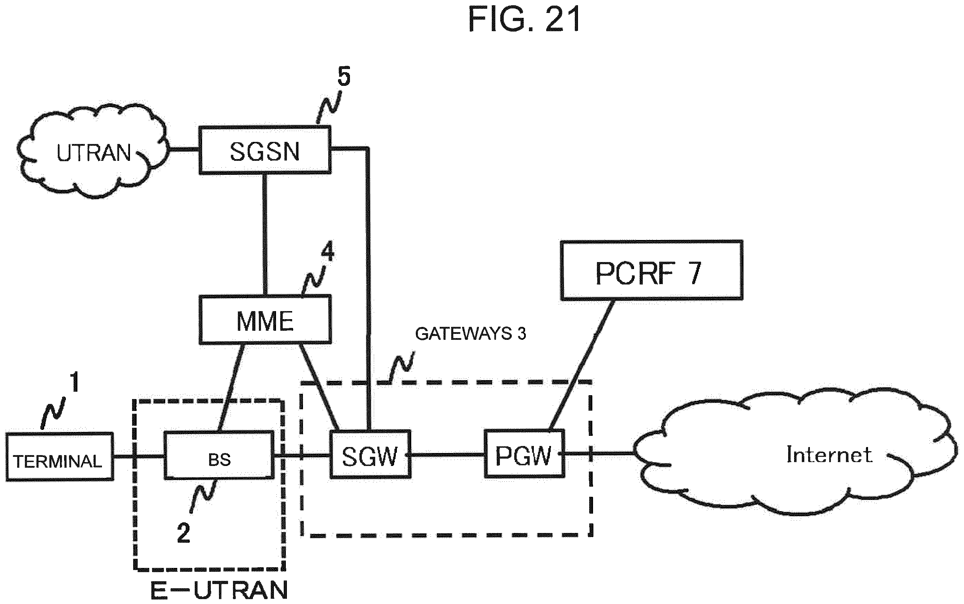

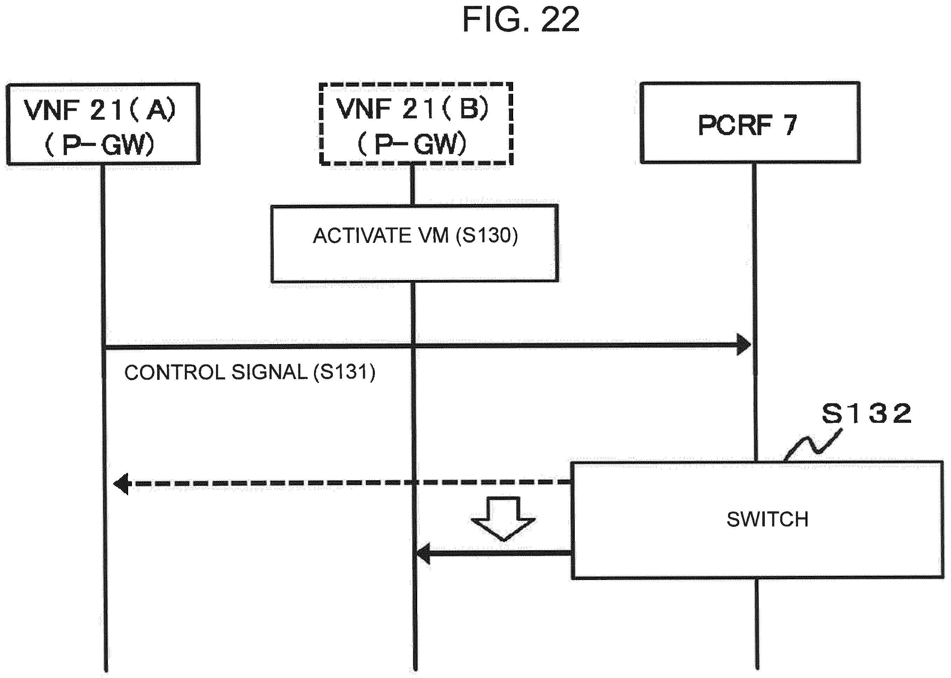

In a communication system according to Example 6, as illustrated in Fig. 21, a correspondence between a VNF 21 having P-GW function and the PCRF 7 is changed according to activation, deactivation, or the like of the VNF 21. Hereinafter, operation in Example 6 will be described with reference to Fig. 22.

Fig. 22 shows an example of operation in the case where a VNF 21(B) having P-GW function is activated and a bearer is switched from a VNF 21 (A) to the VNF 21 (B).

Referring to Fig. 22, it is assumed that the VNF 21 (B) is activated (Operation S130) and that at least part of bearers in the VNF 21 (A) is switched to the activated VNF 21 (B). Operation for bearer switching is similar to the operation described in the other Examples above, and therefore a detailed description thereof will be omitted.

The VNF 21 (A) sends a control signal to the PCRF 7 (Operation S131). The VNF 21 (A) may send a control signal to the PCRF 7 before bearer switching is performed. Note that it is also possible that the VNF 21 (B) sends a control signal to the PCRF 7 after bearer switching.

For example, the VNF 21 (A) sends information, as the control signal, including information related to the bearer and the address of a virtual P-GW to be associated with this bearer (VNF 21 (B) in the example of Fig. 20).

The PCRF 7 changes a correspondence with VNF 21 based on the received control signal (Operation S132).

### 3. Third exemplary embodiment

A third exemplary embodiment of the present invention is applicable to the techniques disclosed in the above-described first and second exemplary embodiments and any of techniques disclosed in the under-described embodiments.

According to the third exemplary embodiment, a control apparatus 30 performs resource control for a communication apparatus 10 or a VNF 21 and, particularly, centrally performs resource control for a plurality of communication apparatuses 10 or VNFs 21, whereby efficiency in operation of a communication system can be increased.

### 3.1) Configuration example 1 of control apparatus

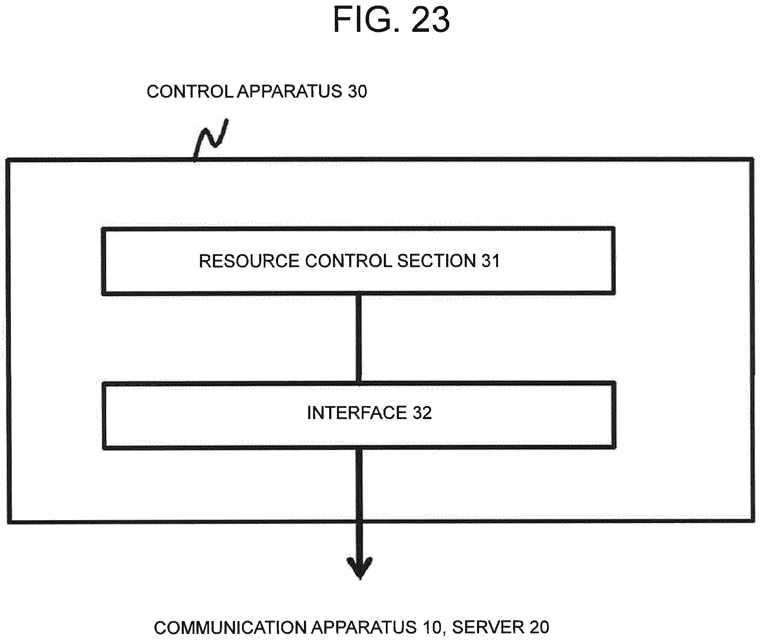

As illustrated in Fig. 23, the control apparatus 30 includes a resource control section 31 and an interface 32 and can communicate with a communication apparatus 10 and a server 20 via the interface 32.

The resource control section 31 controls a resource for a communication apparatus 10 or a VNF 21. For example, the resource control section 31 can instruct a control section 22 of the server 20 to perform resource control such as activation, deactivation, or the like of a virtual machine for operating a VNF 21. Moreover, for example, the resource control section 31 can also perform resource control such as activating a communication apparatus 10 pooled for the communication system to incorporate it in the communication system. Note that the present exemplary embodiment will be described hereinafter by using an example in which the resource control section 31 performs VNF 21-based resource control.

The resource control section 31 can send an instruction for resource control to the control section 22 of the server 20 via the interface 32. Resource control performed by the control section 22 is similar to, for example, the examples shown in the above-described second exemplary embodiment.

### 3.2) Operation example 1

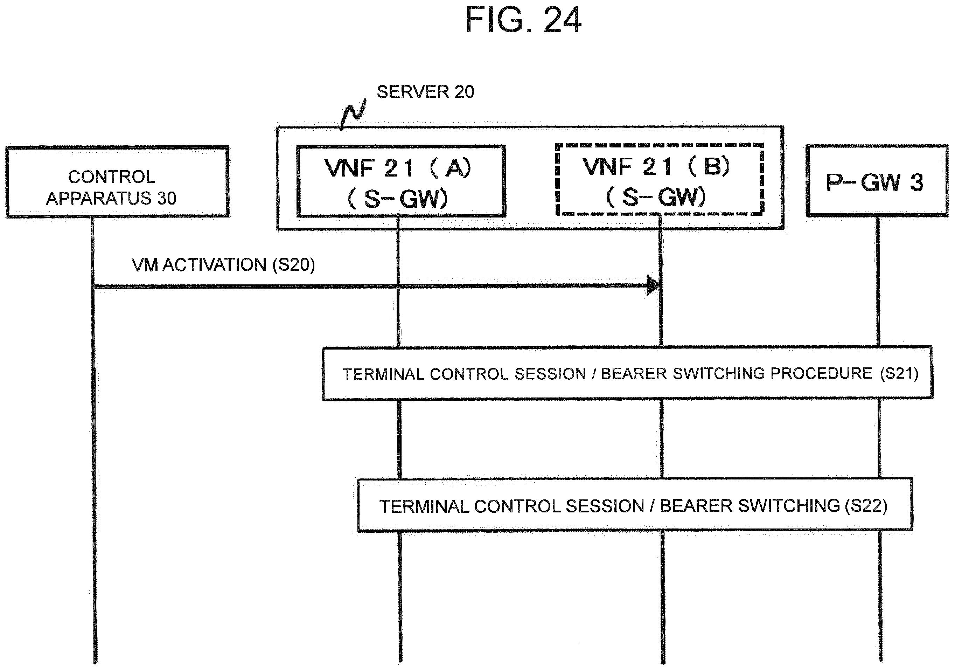

Fig. 24 shows an example in which a bearer between a P-GW and a VNF 21 is switched in response to activation of a VNF 21 (VNF having S-GW function) by the control apparatus 30. Note that the control apparatus 30 can perform resource control such as, for example, deactivation of a VNF 21, apart from the operation example shown in Fig. 24.

The resource control section 31 of the control apparatus 30 instructs the server 20 to activate a virtual machine for operating a VNF 21 (B) (Operation S20). In response to the instruction, the control section 22 of the server 20 activates a virtual machine. The resource control section 31 can set in the instruction to the server 20, for example, the type of a function (S-GW function, P-GW function, PDEF function, or the like) to be provided by a VNF 21.

In response to activation of the VNF 21(B), a VNF 21(A) determines a bearer to be switched from the VNF 21 (A) to the VNF 21 (B) and sends a control signal to the P-GW 3, thereby initiating a bearer switching procedure (Operation S21). Control signals used in the bearer switching procedure are similar to those of the above-described exemplary embodiments (e.g., S1 to S4 in Fig. 5), and therefore a detailed description thereof will be omitted.

The bearer set up between the VNF 21 (A) and the P-GW 3 is switched to a bearer between the VNF 21 (B) and the P-GW 3 (Operation S22). Operation for bearer switching is similar to that of the above-described exemplary embodiments (e.g., S5 in Fig. 5), and therefore a detailed description thereof will be omitted.

### 3.3) Operation example 2

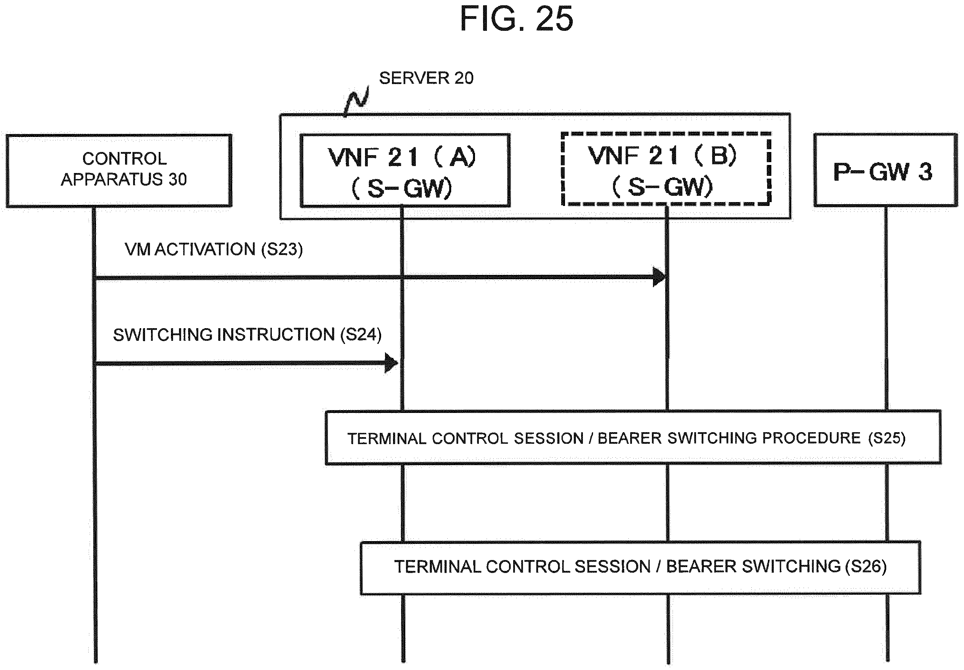

The control apparatus 30 can instruct a VNF 21 to issue a control signal, as illustrated in Fig. 25.

Referring to Fig. 25, the resource control section 31 of the control apparatus 30 instructs the control section 22 of the server 20 to activate a virtual machine corresponding to a VNF 21(B) (Operation S23).

The resource control section 31 instructs a VNF 21 (A) to switch a bearer (Operation S24). The resource control section 31 can determine a VNF 21 to be the bearer switching source, for example, based on the load on a virtual machine, the load on the server 20, or the like. For example, the resource control section 31 determines a VNF 21 operating on a virtual machine under a load higher than a predetermined threshold or a VNF 21 operated by a server under a load higher than a predetermined threshold as the VNF 21 that is the bearer switching source. In the example of Fig. 25, the resource control section 31 determines the VNF 21 (A) as the bearer switching source and instructs the VNF 21 (A) to perform bearer switching. The resource control section 31 can also indicate to the VNF 21 (A) which bearer or bearers are to be switched.

In response to the instruction, the VNF 21 (A) issues a control signal to the P-GW 3 to initiate a bearer switching procedure (Operation S25) and switches a bearer (Operation S26). The other operations are similar to those of the above-described exemplary embodiments, and therefore a detailed description thereof will be omitted.

### 3.4) Configuration example 2 of control apparatus

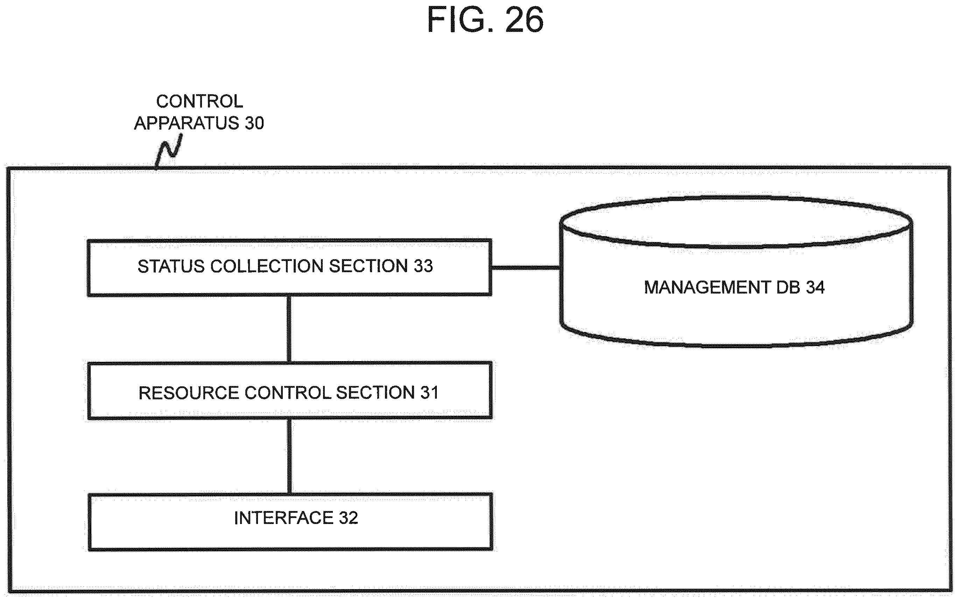

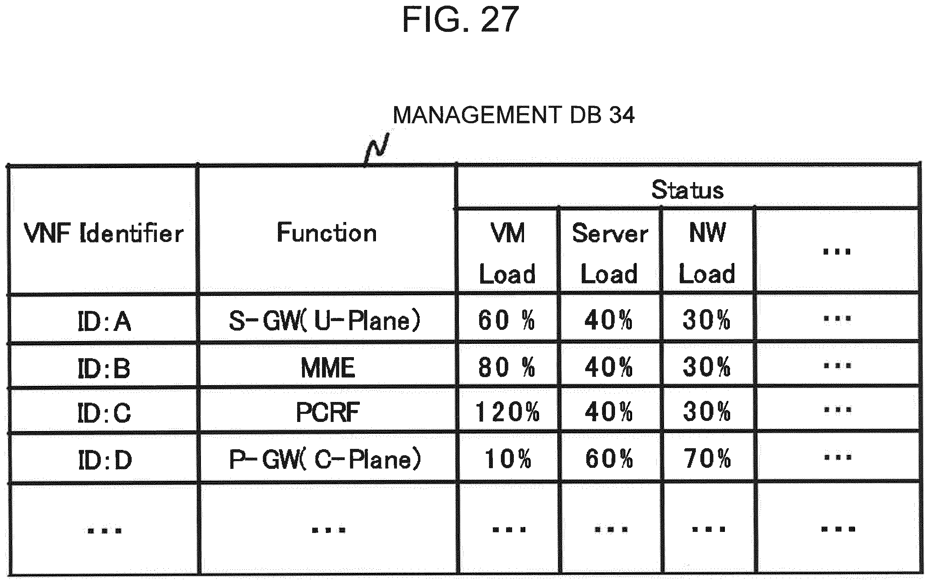

With reference to Figs. 26 and 27, another example of the configuration of the control apparatus 30 will be described. The control apparatus 30 includes a status collection section 33 and a management DB (Data Base) 34 in addition to the resource control section 31 and the interface 32, as illustrated in Fig. 26.

The status collection section 33 collects information from the server 20. For example, the status collection section 33 stores information structured as illustrated in Fig. 27 in the management DB 34, based on the collected information. For example, the management DB 34 identifies each VNF 21 based on the identifier of the VNF 21 (VNF Identifier) and manages information for each VNF ID.

The status collection section 33 can store status corresponding to each VNF 21 in the management DB 34. For example, the status collection section 33 can collect the load status of a virtual machine corresponding to each VNF 21 or of the server 20 (VM Load or Server Load in Fig. 27) and store it in the management DB 34. For example, the status collection section 33 can also collect the load status of a communication path related to each VNF 21 (NW Load in Fig. 27).

The resource control section 31 can perform resource control based on the information stored in the management DB 34. For example, the resource control section 31 can perform activation, deactivation, or the like of a virtual machine, depending on the load on a virtual machine or the server 20 or the like. Moreover, the resource control section 31 can determine a VNF 21 to be the bearer switching source, based on the information stored in the management DB 34.

The resource control section 31 can compare a predetermined threshold with the information in the management DB 34 and perform resource control based on the comparison result. For example, when the load on a virtual machine operating a VNF 21 (VM Load in Fig. 27) exceeds a predetermined threshold, the resource control section 31 instructs the server 20 to activate a virtual machine to operate a VNF 21 having the same type of function. Moreover, for example, when the load on the server 20 (Server Load in Fig. 27) exceeds a predetermined threshold, the resource control section 31 instructs another server 20 under a load not larger than a predetermined threshold to newly activate a virtual machine.

### 4. Fourth exemplary embodiment

A fourth exemplary embodiment of the present invention is applicable to the techniques disclosed in the above-described first to third exemplary embodiments and any of techniques disclosed in the under-described embodiments.

According to the fourth exemplary embodiment, bearer switching can be performed on a basis of a group to which a plurality of bearers belong. Since bearers are switched on a group basis, time taken to switch bearers can be reduced.

### <Outline of bearer switching>

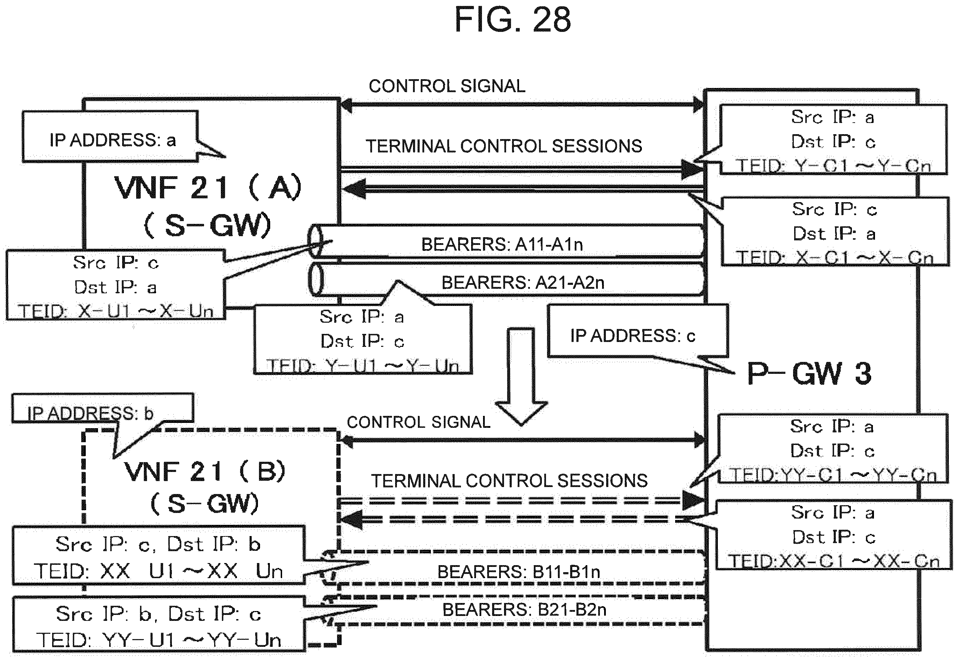

As illustrated in Fig. 28, in a system according to the present exemplary embodiment, a VNF 21 (B) having S-GW function is activated, and a plurality of bearers set up between a VNF 21 (A) and a P-GW 3 are switched in a unit of a group.

The VNF 21 (A) sends a control signal including information related to the plurality of bearers belonging to a bearer group to the P-GW 3. For example, the VNF 21 (A) sends information, by using the control signal, including the address of a VNF 21 to be the bearer switching destination and new TEIDs for the plurality of bearers belonging to the group. In the example of Fig. 28, the VNF 21 (A) sends information related to the plurality of bearers (bearers: A11 to A1n) belonging to the bearer group to the P-GW 3 by using the control signal. The bearers A11 to A1n for uplink (bearers from VNF 21 to P-GW) are switched to bearers B11 to B1n.

The P-GW 3 sends a control signal for switching bearers for downlink (bearers from the P-GW 3 to VNF 21) to the VNF 21(B) to be the bearer switching destination. In the example of Fig. 28, the plurality of bearers for downlink (A21 to A2n) are switched to a plurality of bearers (B21 to B2n), respectively.

The other operations are similar to those shown in Fig. 8, and therefore a detailed description thereof will be omitted.

Each VNF 21 has a function of grouping a plurality of bearers. Each VNF 21 can group a plurality of bearers and switch the bearers on a group basis as in the example of Fig. 28.

### <Grouping of bearers>

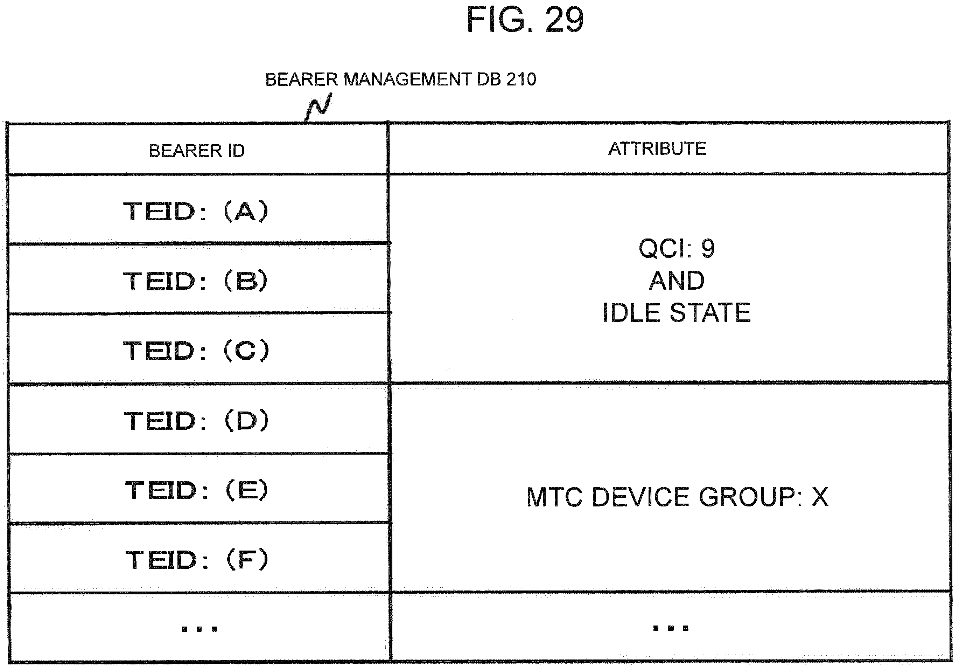

As illustrated in Fig. 29, the VNF 21 can manage bearer groups based on a bearer management DB 210. In the example of Fig. 29, the VNF 21 groups bearers based on attributes related to bearers. Examples of a bearer-related attribute are listed below.
- Area where terminal 1 is staying (E-UTRAN Cell ID or the like)
- Charging property with respect to terminal 1 (normal charging, pre-paid charging, flat rate, or the like)
- Communication status of terminal 1 (whether or not it has made a certain volume of communication or more within a certain period of time)
- Whether or not terminal 1 is an MTC (Machine Type Communication) device
- MTC device group to which terminal 1 belongs
- Type of an MTC application communicated by terminal 1
- Operator ID (the ID of the operator of a core network to which terminal 1 is connected)
- Packet Data Network (PDN) to which terminal 1 is connected
- QoS characteristic
- State of terminal 1 (IDLE state or CONNECTED state): IDLE state means, for example, a state where terminal 1 is not consecutively exchanging control signals for session management and mobility management with a core network, or a state where wireless connection with a base station is released. CONNECTED state means, for example, a state where terminal 1 is consecutively exchanging control signals for session management and mobility management with a core network, or a state where terminal 1 is wirelessly connected to a base station.

Note that the above-mentioned attributes are listed for illustration, and it is also possible that the VNFs 21 group bearers based on another attribute.

The VNFs 21 can group bearers based on UE-related information of the "EPS Bearer Contexts" disclosed in subchapter 5.7 of standard specifications (3GPP TS23.401).

The VNF 21 can group bearers based on the content of a contract between the user of a terminal 1 and the carrier. For example, it is possible that a VNF 21 groups those bearers associated with users who have made contracts for higher fees (e.g., "Premium Subscribers") than other users with the carrier. Moreover, it is possible that the VNF 21 groups those bearers associated with users under normal contracts.

The VNF 21 can group bearers based on information about the location of a terminal 1 (e.g., GSP information or information on a base station to which a terminal 1 is attaching). For example, it is possible that a VNF 21 groups bearers associated with terminals 1 in proximity to each other based on information about a base station to which the terminals 1 are attaching.

The VNFs 21 can group bearers based on the QoS (Quality of Service) information of each bearer. For example, it is possible that a VNF 21 groups bearers based on a QCI (Quality Class Indicator) corresponding to each bearer. For example, a VNF 21 groups those bearers corresponding to QCls with lower priorities than a predetermined value and, when a VNF 21 is newly activated, performs control such that the bearers belonging to the relatively low priority group will be switched to the newly activated VNF 21. In general, when a bearer is switched to a newly activated VNF 21, a delay and the like occur in communication, lowering the QoE (Quality of Experience) of a user. However, only those bearers in a relatively low priority group are made to be targets to be switched, whereby QoE lowering can be limited to occurring in the lower priority bearers.

Note that MTC (Machine Type Communication) in the above-mentioned bearer-related attributes means a form of data communication that does not necessarily require human involvement, such as, for example, smart meters and automatic vendor machines. The standardization of MTC has been proceeded in technical standard specifications (3GPP TS22.368 and the like). It is conceivable that a MTC device performs communication at a specified time (e.g., "at 12:00 p.m. every day", "at 3:00 a.m. every Friday", or the like). Accordingly, if a number of MTC devices of the same type (e.g., smart meters) start communication at the same time, a large volume of traffic may possibly occur at a specified time. The VNF 21 therefore switches bearers associated with MTC devices to a VNF 21 that dedicatedly handles such bearers associated with MTC devices. Thus, it is possible to avoid a situation where communications related to the MTC devices degrades the performance of communications related to non-MTC devices. Moreover, it is also possible that the operator of a communication system operates the communication system so that a virtual machine operating a VNF 21 dedicated to MTC devices will be dynamically activated at a time at which the MTC devices are expected to start communication. Moreover, the operator may operate the communication system so that the virtual machine operating the VNF 21 dedicated to MTC devices will be deleted when the communications of the MTC devices have completed.

The VNF 21 can also group a plurality of bearers based on CSID for identifying a PDN connection group.

The TEID of each bearer may be allocated in such a manner that the respective TEIDs of a plurality of bearers belonging to a group can be collectively identified. For example, a TEID is allocated to each of a plurality of bearers belonging to a group such that the TEIDs, each of which is composed of 32-bit information, will have the same upper 24 bits. By allocating TEIDs in this manner, the VNF 21 can collectively identify a plurality of bearers belonging to a group based on the upper 24-bit information of their TEIDs.

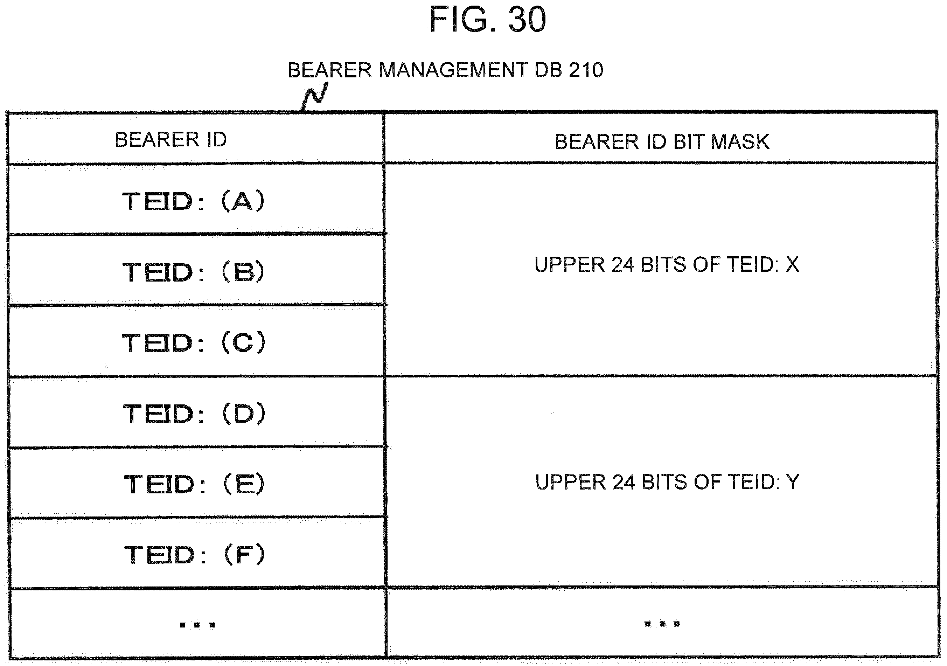

For example, the VNF 21 can manage a group of bearers based on a TEID bit mask (here, the upper 24 bits of a TEID), as in an example of the bearer management DB 210 shown in Fig. 30.

### <Control apparatus>

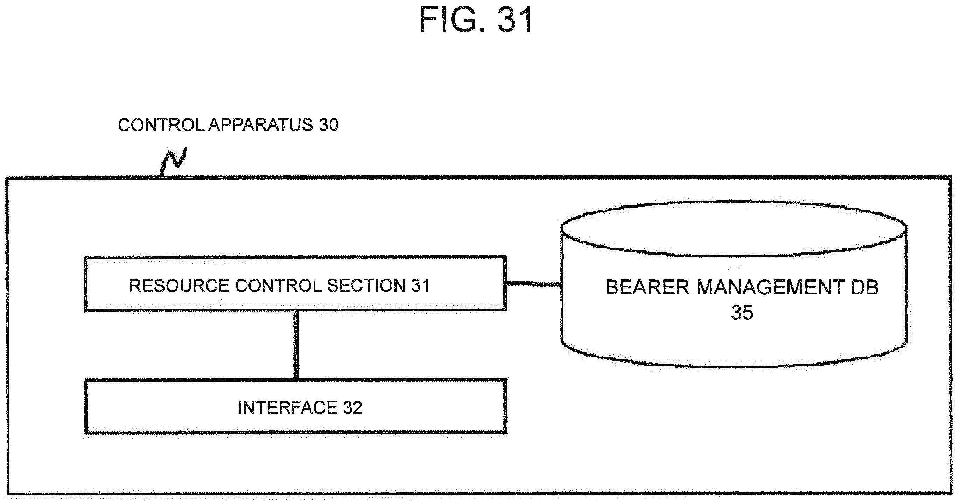

It is also possible that a control apparatus 30 manages a plurality of bearers as a group similarly to the VNF 21, as illustrated in Fig. 31. The control apparatus 30 includes a bearer management DB 35 in addition to the configuration examples illustrated in the above-described exemplary embodiment.

For example, the bearer management DB 35 can store information in the structure illustrated in Fig. 29 or 30. That is, the bearer management DB 35 has information about bearer groups set up based on any of the above-described attributes or the like. The resource control section 31 can refer to the bearer management DB 35 and perform resource control for a VNF 21 or the like.

The resource control section 31 instructs the server 20 to perform resource control for a virtual machine that operates a VNF 21, depending on the load on the virtual machine, the load on the server 20, or the like, for example, as in the examples of the above-described third exemplary embodiment.

For example, the resource control section 31 can refer to the bearer management DB 35 and determine a bearer group to be allocated to a virtual machine that is newly activated through the above-described resource control.

The resource control section 31 allocates the bearer group based on an attribute as described above to a VNF 21 operating on the newly activated virtual machine. For example, the resource control section 31 allocates a plurality of bearers having the same QoS property to the VNF 21 operating on the newly activated virtual machine. Moreover, for example, the resource control section 31 allocates a plurality of bearers associated with the same MTC device group to the VNF 21 operating on the newly activated virtual machine.

The resource control section 31 can instruct a VNF 21 to switch bearers belonging to a group. The VNF 21, in response to the instruction, switches the plurality of bearers belonging to the group. For example, the resource control section 31 instructs a switching-source VNF 21 to switch a plurality of bearers belonging to the group. For example, the resource control section 31 notifies the switching-source VNF 21 of information including an attribute corresponding to the group (e.g., QCI value, TEID bit mask, MTC device group, or the like). The VNF 21 switches the bearers corresponding to the notified information to a switching-destination VNF 21.

### 5. Fifth exemplary embodiment

A fifth exemplary embodiment of the present invention is applicable to the techniques disclosed in the above-described first to fourth exemplary embodiments.

According to the fifth exemplary embodiment, a control apparatus 30 can set an operation policy on a server 20. The server 20 can autonomously perform resource control based on the set operation policy, and accordingly efficiency in operation of a communication system is increased.

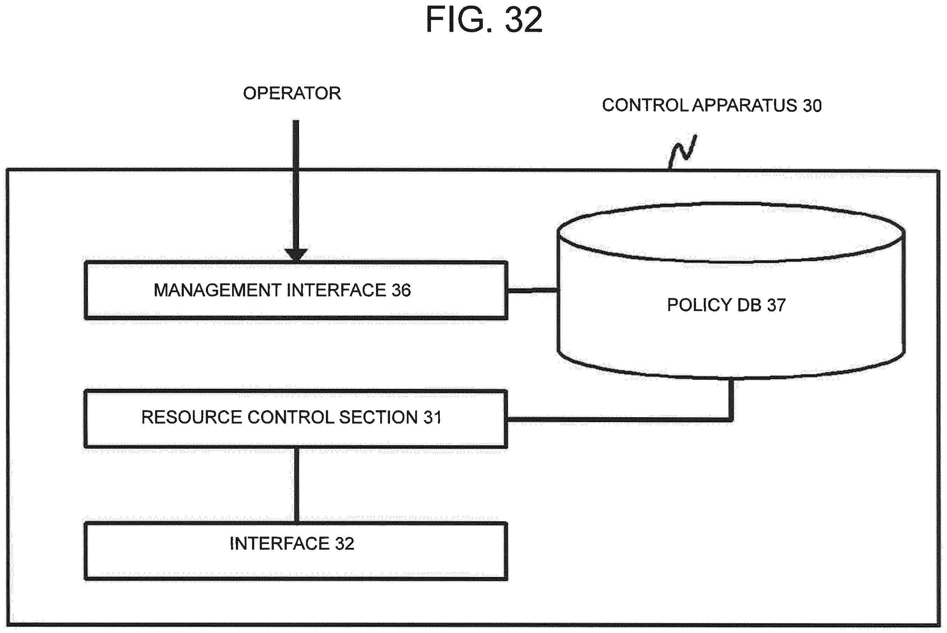

As illustrated in Fig. 32, the control apparatus 30 includes a management interface 36 and a policy DB 37. The other configuration is similar to those of the above-described embodiments.

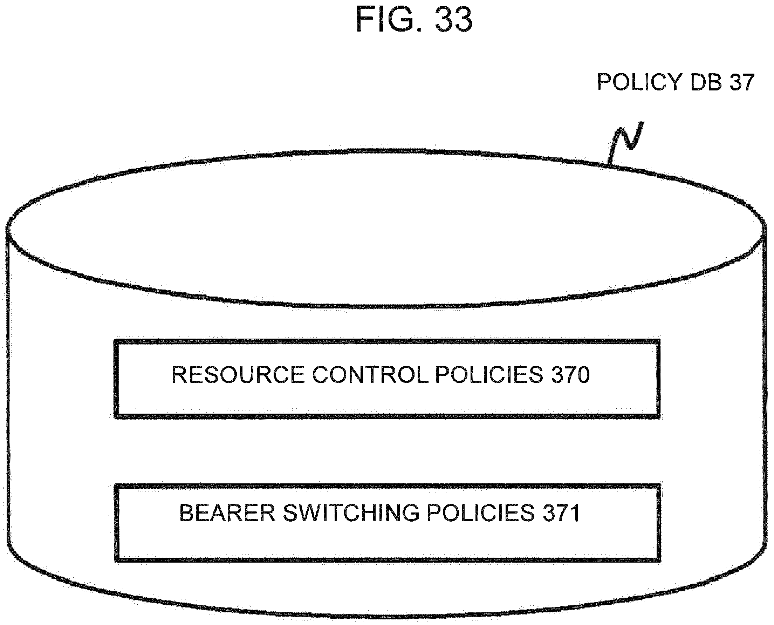

As illustrated in Fig. 33, the policy DB 37 includes resource control policies 370 and bearer switching policies 371. The resource control policies 370 are policies for the server 20 to autonomously perform resource control for a virtual machine that operates a VNF 21. The bearer switching policies 371 are policies for the server 20 to autonomously perform bearer switching.

The operator of the communication system can construct information in the policy DB 37 via the management interface 36. For example, the management interface 36 can provide GUI (Graphical User Interface) for the operator. The operator can set an operation policy in the control apparatus 30 by using the GUI provided by the management interface 36.

Examples of the resource control policies 370 are listed below.
- When the load on a virtual machine operating a VNF 21 exceeds a predetermined threshold, the control section 22 shall activate a virtual machine to operate a VNF 21 having the same function.
- When the load on a virtual machine operating a VNF 21 is equal to or smaller than a predetermined threshold, the control section 22 shall deactivate this virtual machine. The control section 22 shall switch the bearers associated with the virtual machine to be deactivated to a VNF 21 operating on another virtual machine.
- When the communication load on the system exceeds a predetermined threshold, the control section 22 shall activate a virtual machine to operate a VNF 21.
- When the rate of increase in C-Plane signals exceeds a predetermined threshold, the control section 22 shall activate a virtual machine to operate a VNF 21 having C-Plane function (e.g., C-plane function of S-GW or P-GW, or MME function).

The resource control section 31 of the control apparatus 30 notifies the resource control policies 370 as described above to the control section 22 of the server 20. The control section 22 autonomously controls virtual machines based on the notified policies.

Examples of the bearer switching policies 371 are listed below.
- When the load on a virtual machine operating a VNF 21 exceeds a predetermined threshold, the VNF 21 shall switch a bearer to another VNF 21 having the same function.
- When the load on a virtual machine operating a VNF 21 exceeds a predetermined threshold, the VNF 21 shall switch a bearer or bearers to another VNF 21 having the same function. The VNF 21 shall determine the number of bearers to be switched to the other VNF 21 depending on the load on the virtual machine.
- When the load on a virtual machine operating a VNF 21 exceeds a predetermined threshold, the VNF 21 shall switch bearers to another VNF 21 having the same function. The VNF 21 shall switches the bearers on a bearer group basis.
- When the load on a virtual machine operating a VNF 21 exceeds a predetermined threshold, the VNF 21 shall switch a bearer to another VNF 21 having the same function. The VNF 21 shall determine a bearer to be switched based on the priority of the bearer.
- When the load on a virtual machine operating a VNF 21 is equal to or smaller than a predetermined threshold, the control section 22 deactivates this virtual machine. The VNF 21 to be deactivated switches the bearers associated with itself to a VNF 21 operating on another virtual machine.
- When the load on a VNF 21 processing C-Plane signals (e.g., C-plane function of S-GW or P-GW, or MME function) exceeds a predetermined threshold, the VNF 21 switches a bearer to another VNF 21 processing C-Plane signals.

The resource control section 31 of the control apparatus 30 notifies the bearer switching policies 371 as described above to the VNF 21. The VNF 21 autonomously switch a bearer or bearers based on the notified policies.

The fifth exemplary embodiment shows an example in which the above-described resource control policies 370 and bearer switching policies 371 are set on the server 20 by the control apparatus 30. However, the present invention is not limited to the fifth exemplary embodiment. For example, the resource control policies 370 may be pre-set on the control section 22 of the server 20. Moreover, for example, the bearer switching policies 371 may be pre-set on the VNFs 21.

Exemplary embodiments of the present invention have been described hereinabove. However, the present invention is not limited to each of the above-described embodiments. The present invention can be implemented based on a modification of, a substitution of, and/or an adjustment to each exemplary embodiment. Moreover, the present invention can be also implemented by combining any of the exemplary embodiments. That is, the present invention incorporates the entire disclosure of this description, and any types of modifications and adjustments thereof that can be implemented based on technical ideas. Furthermore, the present invention can be also applied to the technical field of SDN (Software-Defined Network).

### [Reference Signs List]

- 1: Terminal
- 2: Base station
- 3: Gateway
- 4: MME
- 5: SGSN
- 6: Router
- 7: PCRF
- 10: Communication apparatus
- 11: Control section
- 12: Switching section
- 20: Server
- 21: Virtual network function
- 22: Control section
- 220: VM control section
- 221: Path control section
- 23: Shared DB
- 24: Network
- 25: RRH
- 30: Control apparatus
- 31: Resource control section
- 32: Interface
- 33: Status collection section
- 34: Management DB
- 35: Bearer management DB
- 36: Management interface
- 37: Policy DB
- 370: Resource control policies
- 371: Bearer switching policies

## Claims

1. A communication apparatus in a communication system that provides communication services to a terminal through a communication path associated with the terminal, **characterized by** comprising:
a first means capable of switching a first session set up between the communication apparatus and a network node to a second session; and
a second means capable of sending a control signal including information related to the second session to the network node.

2. The communication apparatus according to claim 1, **characterized in that** the first means is capable of switching the first session to the second session, wherein the first session constitutes part of the communication path.

3. The communication apparatus according to claim 1 or 2, **characterized in that** the first means is capable of switching the first session to the second session, wherein the first session is a signal for terminal control.

4. The communication apparatus according to any one of claims 1 to 3, **characterized in that** the first means is capable of switching, among a plurality of types of sessions each constituting part of the communication path, the first session to the second session of the same type as the first session.

5. The communication apparatus according to any one of claims 1 to 4, **characterized in that** the first means is capable of switching the first session, which constitutes part of the communication path, to the second session while maintaining the communication path.

6. The communication apparatus according to any one of claims 1 to 5, **characterized in that** the second means is capable of notifying the information related to the second session to the network node by using the control signal, which is part of a plurality of types of control signals used to constitute the communication path.

7. The communication apparatus according to any one of claims 1 to 6, **characterized in that** the second means is capable of sending the control signal to the network node that corresponds to the first session among a plurality of types of network nodes included in the communication system.

8. The communication apparatus according to any one of claims 1 to 7, **characterized in that** the second means is capable of sending the control signal to the network node, wherein the control signal includes identification information of the second session.

9. The communication apparatus according to any one of claims 1 to 8, **characterized in that** the second means is capable of sending the control signal to the network node, wherein the control signal includes an address used by the network node for a destination of the second session and identification information of the second session.

10. The communication apparatus according to any one of claims 1 to 9, **characterized in that**, triggered by switching of the first session to the second session, the second means can send the control signal to the network node.

11. The communication apparatus according to any one of claims 1 to 10, **characterized in that**, in response to an instruction from a control apparatus that controls the communication apparatus, the second means can send the control signal to the network node.

12. The communication apparatus according to any one of claims 1 to 11, **characterized in that** the first means is capable of sending the control signal for updating a routing table of a router, to the router on an upper-order network side to which the communication system is connected.

13. The communication apparatus according to any one of claims 1 to 12, **characterized in that** the communication apparatus has functionality of at least one of a base station, an MME (Mobility Management Entity), a serving gateway, and a PDN (Packet Data Network) gateway.

14. A communication method by a communication apparatus in a communication system that provides communication services to a terminal through a communication path associated with the terminal, **characterized by** comprising:
switching a first session set up between the communication apparatus and a network node to a second session; and
sending a control signal including information related to the second session to the network node.

15. The communication method according to claim 14, **characterized in that** the first session is switched to the second session, wherein the first session constitutes part of the communication path.

16. The communication method according to claim 14 or 15, **characterized in that** the first session is switched to the second session, wherein the first session is a signal for terminal control.

17. The communication method according to any one of claims 14 to 16, **characterized in that** among a plurality of types of sessions each constituting part of the communication path, the first session is switched to the second session of the same type as the first session.

18. The communication method according to any one of claims 14 to 17, **characterized in that** the first session is switched to the second session while the communication path is maintained, wherein the first session constitutes part of the communication path.

19. The communication method according to any one of claims 14 to 18, **characterized in that** the information related to the second session is notified to the network node by using the control signal, which is part of a plurality of types of control signals used to constitute the communication path.

20. The communication method according to any one of claims 14 to 19, **characterized in that** the control signal is sent to the network node that corresponds to the first session among a plurality of types of network nodes included in the communication system.

21. The communication method according to any one of claims 14 to 20, **characterized in that** the control signal is sent to the network node, wherein the control signal includes identification information of the second session.

22. The communication method according to any one of claims 14 to 21, **characterized in that** the control signal is sent to the network node, wherein the control signal includes an address used by the network node for a destination of the second session and identification information of the second session.

23. The communication method according to any one of claims 14 to 22, **characterized in that**, triggered by switching of the first session to the second session, the control signal is sent to the network node.

24. The communication method according to any one of claims 14 to 23 **characterized in that**, in response to an instruction from a control apparatus that controls the communication apparatus, the control signal is sent to the network node.

25. The communication method according to any one of claims 14 to 24, **characterized in that** the control signal for updating a routing table of a router is sent to the router on an upper-order network side to which the communication system is connected.

26. A communication system that provides communication services to a terminal through a communication path associated with the terminal, comprising:
a communication apparatus; and
a network node that configures a first session with the communication apparatus,
**characterized in that** the communication apparatus includes:
a first means capable of switching the first session to a second session; and
a second means capable of sending a control signal including information related to the second session to the network node.

27. A program **characterized by** causing a computer in a communication system that provides communication services to a terminal through a communication path associated with the terminal, to execute:
processing for switching a first session set up between the communication apparatus and a network node to a second session; and
processing for sending a control signal including information related to the second session to the network node.
